# EUROPEAN PATENT APPLICATION

(11) **EP 4 764 060 A1**
(43) Date of publication of application: **24.06.2026**
(21) Application number: 25224580.8
(22) Date of filing: 17.12.2025
(51) Int. Cl.: D21H 11/18, B32B 29/00, B65D 81/00, D21H 19/02, D21H 19/08, D21H 19/72, D21H 19/80, D21H 21/16, D21H 27/10

(54) **USE OF A PAPER SUBSTRATE, THE BARRIER-COATED PAPER SUBSTRATE, A LAMINATED PACKAGING MATERIAL AND PACKAGING CONTAINER COMPRISING THE BARRIER-COATED PAPER SUBSTRATE**

(30) Priority: 20.12.2024 EP 24222019
(71) Applicant: Tetra Laval Holdings & Finance S.A., 1009 Pully (CH)
(72) Inventor: NYMAN, Ulf, 221 86 Lund (SE); KRIECHBAUM, Konstantin, 221 86 Lund (SE); BERG, Harald, 221 86 Lund (SE); ALDÉN, Mats, 221 86 Lund (SE); SAXENA, Amit, 221 86 Lund (SE)
(74) Representative: Tetra Pak Patent Attorneys

(57) **Abstract**

The present invention relates to the use of a paper substrate (11) in a high-quality, barrier-coated paper substrate (10) for providing good toughness, flexibility and oxygen barrier properties to a laminated packaging material and to packaging containers comprising the laminated packaging material. The barrier-coated paper substrate may also provide heat sealing capability to a laminated packaging material comprising it. The barrier-coated paper substrate (10; 23), is suitable in packaging of oxygen-sensitive food products.

## Description

### Technical field

The present invention relates to the use of a paper substrate made from cellulose fibres, in a gas-barrier coated paper substrate material and in a laminated packaging material comprising the gas-barrier coated paper substrate, for packaging of oxygen sensitive food products, such as for liquid, semi-liquid or viscous food and beverage products. The invention further relates to a packaging container formed and heat-sealed from the laminated packaging material comprising the barrier-coated paper substrate.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other paper material, and outer, liquid-tight layers of thermoplastics. In order to render the packaging container gas-tight, in particular oxygen gas-tight, for example for the purpose of aseptic packaging and packaging of milk or fruit juice, the laminate material in such packaging containers normally comprises at least one additional barrier layer, most commonly an aluminium foil.

On the inside of the laminate, i.e. the side intended to face the filled food contents of a container produced from the laminate, there is at least one inside polymer layer, applied onto the aluminium foil, which inside polymer layer(s) may be composed of one or several part layers, comprising an innermost layer of heat sealable thermoplastic polymers, and further inside layers such as adhesive polymers and/or polyolefins. Also on the outside of the bulk layer, there is an outermost heat sealable polymer layer, facing the outside of a packaging container produced from the laminate.

The packaging containers are generally produced by means of modern, high-speed packaging machines of the type that form, fill and seal packages from a web or from prefabricated blanks of packaging material. Packaging containers may thus be made by reforming a web of the laminated packaging material into a tube by uniting the longitudinal edges of the web to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material. Each package may be equipped with an opening device, such as a screw cork, before or after filling, forming and sealing of the container.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

In recent years, most of the producers of food packaging containers are focusing on reaching recyclability and sustainability standards promoted by various governments and other institutions, such as the European Union. The objective of these efforts is to deliver a future carton-based packaging container, made to a larger extent of renewable packaging materials, and being to a higher degree recyclable, to reduce waste and pollution.

One aspect of sustainability is to provide alternatives to aluminium foil as a barrier layer. A layer of an aluminium foil in the packaging laminate provides gas barrier properties quite superior to most other gas barrier materials. The conventional aluminium-foil based packaging laminate for liquid food aseptic packaging has inherent barrier properties also to water vapour, to light, to aroma, flavour and acidic substances, and is still the most cost-efficient packaging material, at its level of performance, available on the market today. Moreover, the aluminium foil enables heat sealing and heating of the laminated material by means of induction in the aluminium foil. Aluminium foil barriers for liquid carton food packaging are normally from 5 to 9 µm in thickness, such as most commonly about 6 µm.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is an incentive towards developing premanufactured films or sheets having high and multiple barrier functionalities, which may replace the aluminium-foil barrier material in the conventional laminated packaging material or, be combined with other barrier layers in the laminated material and adapt them to conventional processes for lamination and manufacturing of laminated packaging materials.

In line with increased requirements to use only sustainable materials, polymeric barrier materials originating from fossil sources have become less interesting, and thus it remains to work with the types of thin barrier coatings which would be almost negligible in recycling processes and cause very little problems in an economy based on circulation of materials and renewable (non-fossil) materials, i.e. aqueous dispersion coatings and vapour deposition coatings. Such coatings are applied on substrates which do not typically provide significant barrier properties themselves e.g. polyolefin, polyester or paper. The thickness of a dispersion-coated polymer is normally around 0.5 to 3 µm, while vapour-deposited barrier coatings are typically in the order of tens of nanometres.

Preferred types of such alternative, more environmentally sustainable barrier materials are barrier-coated paper substrates made by aqueous dispersion coating or vacuum based vapour deposition coating onto thin paper carrier substrates. There are various aqueous dispersion coating processes and vapour deposition coating processes and material recipes for such coatings, but there is a need for cost-efficient barrier materials of this "non-foil" type, i.e. non-aluminium-foil, having improved properties for use in packaging laminates for liquid food packaging, regarding barrier properties, towards gases, such as oxygen gas.

An earlier published patent application WO2011/003565A1 discloses a non-aluminium-foil packaging material comprising a pre-coated and metallised Kraft paper substrate for the purpose of induction heat sealing. It recommends rather thick pre-coating layers and to include additional nanoclay particles in the pre-coating, and for good gas barrier properties it is also recommended to apply further barrier coating layers in the packaging laminate, such as onto the back side of the paper substrate or onto the bulk paperboard layer.

The earlier published patent application WO2017/089508A1 discloses how further improved barrier properties may be obtained from a metallised paper in a similar packaging laminate, by selecting a paper substrate providing optimal properties.

The earlier published patent application WO2023174915A1 relates to a method for optimizing the quality and quantity of the barrier-coatings in a barrier-coated paper substrate for liquid packaging, wherein the selection of the paper substrate and its surface properties also plays an important role.

The earlier published patent application WO2024110075A1 further relates to how to improve package integrity of laminated packaging materials for liquid packaging, having a barrier-coated paper substrate as non-foil, oxygen barrier material.

There remains, however, a need for an improved gas-barrier-coated paper substrate to provide more robust and reliable package integrity properties as well as good oxygen gas barrier properties in a laminated packaging material.

There remains generally also a need for good recyclability and sustainability of the materials used, aiming to simplify fibre recycling and to reduce the amounts of non-paper materials, as well as to reduce the number of different types of materials used.

### Summary of the invention

According to a first aspect of the invention, there is provided a use of a paper substrate, for a gas-barrier coated paper substrate for packaging of oxygen sensitive food products, such as liquid, semi-liquid or viscous food and beverage products or water, wherein the paper substrate has
a thickness from 25 to 100 µm and a density from 700 to 1500 kg/m³, as determined according to ISO534:2011, and is made from a cellulose fibre composition comprising from 65 to 100 weight- % of chemical softwood fibres of the total fibre content, having a length-weighted, average fibre length from 1.2 to 2.5 mm, as determined according to ISO 16065-2:2014, after sample preparation according to ISO 5263-1:2004,
the cellulose fibre composition comprising fewer than 5000 shives per gram of fibre composition, as determined according to the method FA 10.402 from Pulpeye after sample preparation according to ISO 5263-1:2004,
the paper substrate further having
a tensile energy absorption index, TEA Index, Geometrical Mean, GM, above 1.3 J/g as measured at 50 % RH and 23 °C according to ISO1924-3:2005 and
a tensile energy absorption index CD to MD ratio from 1.1 to 2.0 as measured at 50 % RH and 23 °C according to ISO1924-3:2005,
and an Equilibrium moisture content, Eq. MC from 7 % to 10 %, as measured according to ISO 287:2017, at 50 % RH and 23 °C, as conditioned according to ISO 187:2022.

Such a paper substrate provides toughness and ductility for carrying thin and delicate gas barrier coatings and brings toughness and ductility to laminated packaging materials and fold-formed packaging containers comprising such barrier-coated paper substrates.

In the case of less tough paper substrates, it has been observed that as the paper is prone to breaking or cracking upon fold-forming of the laminated packaging material comprising it, also the surrounding layers may be negatively affected. The barrier coatings applied onto the paper substrate may be negatively affected as they are very thin and relying on their good quality to provide good barrier to oxygen gas. Also the inside polymer layers may be negatively affected, however. The inside polymers are important for preserving good packaging integrity and to provide good heat seals in the filled and sealed packaging containers. If the paper is not ductile and flexible enough in the folding operation, the forces from paper breakage may cause the inside polymer layers to stretch too much, thus thinning the polymer layers locally. When such local, thinner areas of the polymer layer is later further strained in handling and distribution, there may be an increased risk for failure also in the polymer inside, thus potentially resulting in undesired entry points to external moisture and microbes to eventually reach the inside of the packaging container. Such risks must be avoided, why more robust and load-bearing inside polymer layers have been introduced to cope with the difficult properties of barrier-coated paper substrates. A good working example of a robust and load-bearing layer is a cast, biaxially oriented, pre-made film in the majority comprising LLDPE polymers having the required toughness and resistance to thermal and mechanical load in fold-forming and in heat sealing, as described in the earlier published patent application WO2024110075A1. If a better toughness to withstand fibre breakage can be obtained already in the paper substrate itself, however, such a pre-made film may not be necessary in the inside polymer layer configuration, i.e. on the inside of the barrier-coated paper substrate. This may save costs and resources in terms of polymers and polymer film supply.

For obtaining the required toughness in the paper substrate for use in the invention, it is believed that optimal bonding, such as hydrogen bonding and fibre physical entanglement, needs to be created within the cellulose material of the paper substrate, while the original, natural length and strength of the individual cellulose fibres needs to be preserved as far as possible. Accordingly, the cellulose pulp needs to be well treated in the cooking and refining stages to produce as long and well separated fibres as possible. If the fibres are well separated, i.e. avoiding too many remaining fibre bundles, the surface bonding area will increase and thereby promoting toughness. In addition, a larger fibre surface area will increase the number of available water-friendly points or sites on the fibres and thereby increase the interaction between fibres and water. At the same time, the flexibility of the fibres and surface area are increased even more by a gentle refining, such that small fibrillar fragments are formed on the surfaces of the fibres, without degrading, cutting and weakening the fibres. Such separated, undamaged, flexible and surface-fibrillated cellulose fibres are able to retain moisture well and resist drying out in the paper manufacturing process. In addition, the higher flexibility and surface area will make the fibres more prone to conform around each other and form strong bonding.

The fibres in the composition may have a length-weighted average fibre length from 1.3 to 2.5 mm, such as from 1.4 to 2.5 mm, such as from 1.5 to 2.5 mm, such as from 1.6 to 2.5 mm, as measured according to ISO 16065-2:2014, after sample preparation according to ISO 5263-1:2004. Such fibre length is achieved from softwood fibres and by avoiding too high refining thereof.

The main part of the total fibre content, i.e. from 65 to 100 weight %, may thus be softwood fibres, while the balance, i.e. the remaining part of fibre content, i.e. 35 weight-% or less, may thus be hardwood fibres.

Suitably, the cellulose fibres of the paper substrate exhibit a Canadian Standard Freeness, CSF, value from 200 to 500 ml, such as from 200 to 450 ml, such as from 200 to 400 ml, such as from 200 to 350 ml, as measured according to ISO 5267-2:2001, after laboratory wet disintegration according to ISO 5263-1:2004. A not too low CSF value indicates good draining capability and consequently good repulpability of the fibres, which in a way indicates that the fibrillar content is rather low, i.e. that the content of cellulose in the form of easily swellable molecules or fibrils is low.

The equilibrium moisture content, which is a measure of how well moisture is retained within the cellulose fibre composition, is rather high, from 7 to 10 %, such as from 7 to 9 %. This indicates on the other hand that the cellulose fibres are well separated into individual fibres and that the content of non-absorbing fibre bundles, or other small impurities, is low. Since water has a softening effect on cellulose, and fibrous materials such as paper, retaining moisture is also beneficial in terms of mechanical properties making the paper more ductile. More specifically, during forming of packaging containers containing paperboard and paper it is desired to use materials that can cope with the deformations without cracking, i.e. a more ductile material.

Preferably, the cellulose fibre material is predominantly made from unbleached, chemical pulp, thus being cooked in the preparation stage to disintegrate the wood particles into cellulose fibres and remove lignin and it is less worked on by mechanical force than in mechanical or thermo-mechanical or chemo-thermo-mechanical pulping. The absence of a bleaching step may be important and provide for undamaged fibres and a good ability to retain moisture. Although similar properties may be obtained also with carefully prepared bleached, chemical cellulose fibres, non-bleached chemical cellulose is thus preferred. It is also advantageous to not bleach for a more sustainable pulping process.

The paper substrate may be made from a fibre composition comprising in the majority unbleached fibres, has a colour as defined within the CIELAB color space, having a lightness, L, from 30 to 85, a value on the red-green axis, a*, from 0 to 18 and a value on the yellow-blue axis, b*, from 10 to 40.

Alternatively defined, the paper substrate may be made from a fibre composition comprising in the majority unbleached fibres having a brightness from 0 to 55 % as determined in accordance with ISO 2470-1:2016.

The cellulose material should be as pure as possible and comprise fewer than 5000 shives per gram of fibre composition, such as fewer than 4000 shives per gram of fibre composition to enable a homogeneous and isotropic cellulose material with as high mechanical strength as possible. Preferably, the cellulose fibre material of the paper substrate comprises fewer than 3000 shives per gram of fibre composition, more preferably fewer than 2000 shives per gram of fibre composition, most preferably fewer than 1000 shives per gram of fibre composition, as determined according to the method FA 10.402 from Pulpeye after sample preparation according to ISO 5263-1:2004. When fewer than 3000, such as fewer than 2000, such as fewer than 1000 shives per gram of fibre composition, as in electrical grades of high-quality papers, a significant increase in toughness and tensile energy absorption is seen.

Furthermore, the ash content of the paper substrate should preferably be relatively low, i.e. below 5%, such as below 3.5%, preferably below 2.5%, as measured according to ISO 2144:2015.

The paper substrate suitable for use for carrying barrier coatings and further use in laminated packaging materials may be made by a method comprising at least the steps of
a) cooking chemical pulp of a liquid cellulose fibre composition comprising at least 65 weight-% of softwood fibres of the total fibre content,
   - to disintegrate fibre bundles into individual cellulose fibres, and
   - to remove lignin to a remaining content of 10 weight-% or less,
b) refining the fibres moderately to produce fibrillar fragments on the surfaces of the fibres and to further disintegrate fibre bundles into individual cellulose fibres,
c) optionally, washing the pulp to remove impurities, and
d) screening away shives and remaining particles from the disintegrated fibre composition,
before further steps of forming, pressing, sizing, drying and calendering.

There is thus provided a cellulose fibre composition comprising fewer than 5000 shives per gram of fibre composition, as determined according to the method FA 10.402 from Pulpeye after sample preparation according to ISO 5263-1:2004.

There may be an extra step of selective washing, in comparison to conventional paper manufacturing, to remove further impurities. Impurities, being small fines and debris which do not contain useful fibre material, including small such organic or inorganic particles, may affect the paper strength/ toughness negatively and should be removed as far as possible. Care should be taken, however, to not remove too much fibrous material from the pulp in the washing steps. The amount of remaining small particles and/or non-fibres, i.e. fines or debris, may be determined by a BauerMcNett fibre analyzer.

Advantageously, for improved coatability, the top side of the paper substrate, which is intended for being barrier-coated, i.e. the coating side, has a Bendtsen surface roughness below 150 ml/min, such as below 100 ml/min, such as below 80 ml/min, such as below 60 ml/min, such as below 50 ml/min, such as below 30 ml/min, such as below 20 ml/min, as determined according to ISO 8791-2:2013.

Further advantageously, for improved coatability, the top side, i.e. coating side, of the paper substrate has a Cobb 60 value below 40 g/m², such as below 30 g/m², such as below 25 g/m², according to ISO 535:2014.

According to a second aspect of the invention, a barrier-coated paper substrate is provided, for use as a gas barrier material in a laminated packaging material for packaging of oxygen-sensitive products, such as in a laminated packaging material for liquid, semi-liquid or viscous food and beverage products. The barrier-coated substrate comprises the paper substrate of the first aspect, and at least one pre-coating or gas barrier coating, applied onto the paper substrate by dispersion coating of an aqueous material composition, to a total, dry material coating thickness from 0.2 to 15 µm, such as from 0.2 to 10 µm, such as from 0.2 to 8 µm, such as from 0.2 to 5 µm.

The at least one pre-coating or gas barrier coating may further be coated with a vapour deposition coating, such as a barrier aluminium metallization coating, such as an oxygen-enriched barrier aluminium metallization coating.

The barrier-coated paper substrate of the second aspect may thus have a gas barrier coating comprising from 65 to 100 weight-% of a polymer material selected from the group consisting of polyvinyl alcohol, PVOH, modified polyvinyl alcohol, such as aqueous ethylene-modified polyvinyl alcohol, EVOH_{aq}, starch, starch derivatives, modified starch materials, xylan, xylan derivatives, nanofibrillar/ microfibrillar cellulose, NFC/ MFC, cellulose ethers, and blend compositions of any two or more thereof, and from 0 to 35 weight-% of inorganic particles, based on the total dry weight of the gas barrier coating. Such polymer materials are water dispersible and in most cases renewable, i.e. of non-fossil origin.

More specifically, the barrier-coated paper substrate of the second aspect may have a gas barrier coating comprising from 65 to 100 weight-% of a polymer material selected from the group consisting of polyvinyl alcohol, PVOH, modified polyvinyl alcohol, such as aqueous ethylene-modified polyvinyl alcohol, EVOH_{aq}, starch, starch derivatives, modified starch materials, cellulose ethers, such as carboxymethyl cellulose and hydroxyethyl cellulose, and blend compositions of any two or more thereof, and from 0 to 35 weight-% of inorganic particles, based on the total dry weight of the gas barrier coating.

The paper substrate may first be impregnated with an aqueous polymer dispersion or solution, dried and subsequently calendered, before coating it with the gas barrier coating.

Suitable polymers for aqueous dispersion impregnation of the paper substrate are selected from the group consisting of vinyl alcohol polymers, such as polyvinyl alcohol, PVOH, aqueous ethylene-modified polyvinyl alcohol, EVOH_{aq}, starch, starch derivatives, modified starch, carboxymethyl cellulose and hydroxyethyl cellulose, and blends of two or more thereof. Optionally, the aqueous polymer dispersion or solution may contain a low amount of inorganic particles or pigments.

Such impregnation and subsequent calendering may be performed in the process of manufacturing the paper substrate, i.e. before applying any further pre-coating or gas barrier coating onto the paper substrate. The impregnation step is typically performed by a so-called size-press operation and subsequent calendering and drying of the impregnated paper. By such an impregnation operation, the surface of the paper substrate may be densified and smoothened, and further be "closed" to be non-porous. Such a surface will be more suitable for efficient further dispersion coating of an aqueous gas barrier composition.

The paper substrate may instead of being impregnated, be pre-coated with an aqueous pre-coating composition comprising a polymer binder and optionally clay, inorganic pigments or particles, dried and subsequently calendered. The purpose of such pre-coating operations is likewise to densify, close and smoothen the surface to better receive a further dispersion coating of an aqueous gas barrier composition.

The paper substrate may in an embodiment be pre-coated and densified with an aqueous composition comprising a polymer selected from the group consisting of starch, starch derivatives, modified starch, cellulose ethers such as carboxymethyl cellulose and hydroxyethyl cellulose, and blends of two or more thereof. In another embodiment, the paper substrate may be pre-coated and densified with a clay-coat composition, comprising a polymer binder and a high proportion of clay and/ or inorganic particles, such as calcium carbonate. The polymer binder may advantageously be a latex binder, thus providing some flexibility and ductility to the coating composition, such as SA-latex, SB-latex or other latex formulations, including bio-based latex polymers, such as starch-based latex compositions.

According to a third aspect, a method for manufacturing a barrier-coated paper substrate of the second aspect, comprising the steps of
a) providing and forwarding a continuous web of the paper substrate as defined in the first aspect,
b) providing an aqueous gas barrier coating composition comprising a polymer material selected from the group consisting of polyvinyl alcohol, PVOH, modified polyvinyl alcohol, such as aqueous ethylene-modified polyvinyl alcohol, EVOH_{aq}, starch, starch derivatives, modified starch materials, xylan, xylan derivatives, nanofibrillar/ microfibrillar cellulose, NFC/ MFC, cellulose ethers, such as carboxymethyl cellulose and hydroxyethyl cellulose, and blend compositions of any two or more thereof, and from 0 to 35 weight-% inorganic particles, based on the total dry weight of the gas barrier coating,
c) applying the aqueous gas barrier coating composition onto the top side of the web of the paper substrate by dispersion coating (32a),
d) drying the applied aqueous gas barrier coating from step c), to provide the gas barrier coating,
e) optionally repeating steps c) and d),
f) further coating the gas-barrier coated and dried web substrate obtained from step e), with an aluminium metallization coating by means of physical vapour deposition of aluminium metal vapour.

According to a fourth aspect, a laminated packaging material for packaging of oxygen-sensitive food products is provided, which comprises as layers of a layer sequence, as viewed from outside to inside of a packaging container formed from the laminated packaging material,
an outermost, transparent, and protective material layer,
a barrier-coated paper substrate as of the first aspect,
an inside polymer layer structure comprising at least an innermost, heat sealable, liquid tight layer, which comprises a thermoplastic material and is intended to be in direct contact with a filled food product in a packaging container manufactured from the laminated packaging material.

The laminated packaging material may further comprise a bulk layer of paper, paperboard or other cellulose-based material laminated between the outermost, transparent and protective material layer and the barrier-coated paper substrate.

According to a fifth aspect, there is provided a packaging container, which comprises the laminated packaging material of the third aspect. According to an embodiment, the packaging container is in its entirety made of the laminated packaging material, except for an opening device.

All features described above and in the following detailed description in connection with any aspect of the invention can be used in combination with any other aspect of the invention.

### Detailed description

By the term "long-term storage", used in connection with the present invention, it is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

By the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus generally focused on the ability to withstand thermal- and mechanical loads e.g., during folding and sealing, without fracturing. More specifically, good adhesion is needed between the respective laminate layers and its adjacent layers, as well as high quality of the individual material layers. Regarding the sealing of the packages, the integrity is mainly focused on the quality of the sealing joints, which is ensured by well-functioning and robust heat-sealing operations in the filling machines, which in turn is ensured by adequately adapted heat-sealing properties of the laminated packaging material.

The term "liquid, semi-liquid or viscous food" generally refers to food products having a flowing content that optionally may contain also solid pieces of food. Dairy and milk, soy, rice, grains and seed drinks, juice, nectar, still drinks, energy drinks, sport drinks, coffee or tea drinks, coconut water, wine, soups, crushed tomatoes, sauce (such as pasta sauce), beans and olive oil are some non-limiting examples of food products contemplated.

Examples of other oxygen-sensitive food products, possible to package and protect with the laminated packaging materials of the present disclosure are e.g. dry and/or fatty foods.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued aseptic performance during the shelf-life of the package, the package integrity properties are of course very important. For long-term shelf-life of a filled food product, it may furthermore be important that the package has barrier properties towards gases and vapours, such as towards oxygen gas, in order to keep its original taste and nutritional value intact, such as for example its vitamin C content.

By the term "bulk layer" is normally meant the thickest layer or the layer containing the most material in a multilayer laminate, i.e. the layer which is contributing most to the mechanical properties and the dimensional stability of the laminate and the structural stability of packaging containers folded from the laminate, such as a thick paper, paperboard or carton. It may also mean a layer providing a greater thickness distance in a sandwich structure, which further interacts with stabilising facing layers, which have a higher Young's modulus, on each side of the bulk layer, to achieve sufficient such mechanical properties, such as bending stiffness, for achieving structure stability of formed packaging containers.

By the term "non-foil" packaging material, is meant a laminated packaging material, which does not comprise an aluminium foil of a thickness in the order of micrometres, such as conventional aluminium foils for liquid carton packaging which are normally from 6 to 9 µm thick. A "non-foil" packaging material may comprise a metallisation layer, however, as the thickness of e.g. an aluminium metallisation layer is in the nano-meter scale. The amount of aluminium material employed in such a metallisation coating is very low, and have, in comparison to aluminium foils, a significantly reduced impact on recycling and exploitation of material resources.

The term "dispersion coating" herein relates to a coating technique in which an aqueous or substantially aqueous dispersion, suspension, emulsion or solution of a polymer is applied to the surface of a substrate layer, usually in the form of a continuous web, to form a solid, substantially non-porous film after drying. The term "dispersion" covers thus also any suspension, emulsion or solution or mixes thereof, that would be capable of providing such a coating after drying. Polyvinyl alcohols (PVOH, PVAL) are typical polymers suitable for dispersion coating, but may for example at high saponification degrees in practice rather be polymer solutions, or mixes of dispersed and dissolved PVOH. A dispersion-coated barrier layer or coating is formed by a dispersion coating, also called "liquid-film coating", techniques. An aqueous dispersion may comprise fine polymer-based particles and thus be a "latex".

The term "latex" as used herein refers to a composition comprising an aqueous suspension or dispersion or emulsion of polymer particles, which can be natural polymers, synthetic polymers, synthetic polymers derived from biomasses or combinations thereof.

The term "thermomechanical stability" about a material or a material layer means that the material can maintain mechanical stability and geometry at elevated temperatures, also at shaping or forming the material (such as pressing, folding, heat sealing), such that the metallised layer is well supported and anchored to such a material or layer and does not deteriorate. Furthermore, the material will not melt or soften upon heating to predetermined temperatures.

The term "polyethylene" refers to a polymer comprising ethylene monomers at from about 90 to 100 mol%. There are various types of polyethylene, as explained below.

Low density polyethylene, LDPE, has a density of 917 to 930 kg/m3. It is typically polymerised from ethylene monomers alone and has a branched polymer chain structure with long chain branches, leading to a more branched and less tightly packed molecular arrangement, and a lower overall density than for medium density polyethylene, MOPE, and high density polyethylene, HDPE.

The term "linear low density polyethylene" (or "LLDPE") covers all linear low density polyethylenes, including "ZN-LLDPE" polymerised by means of Ziegler-Natta type catalysts as well as "m-LLDPE" polymerised by catalysts of so-called "constrained geometry", or "single-site" catalysts, such as "metallocene" catalysts, and other linear low density polyethylenes. Both ZN-LLDPE and m-LLDPE are typically produced by copolymerising an ethylene monomer with a C4-C8, more preferably a C6-C8, alpha-olefin alkylene monomer, the latter in the presence of a metallocene catalyst. 1 to 10 mol%, suitably 8 to 10 mol%, comonomer content is typical. LLDPE has significant numbers of short branches. It differs structurally from conventional low-density polyethylene (LDPE) because of the absence of long chain branching. LLDPE polymers typically have a narrower molecular weight distribution than conventional LDPE (this is true for m-LLDPE especially) and significantly different properties. A higher number of short chain branches will lead to a lower degree of crystallinity, because the crystallisation is suppressed in the polymer and therefore its density becomes lower than for MDPE and HDPE.

The term "mPE", denotes a polymer blend for a heat sealable innermost layer comprising at least 50 wt% mLLDPE and up to 50 wt% LDPE, preferably comprising about 70 weight-% of mLLDPE and about 30 weight-% of LDPE. (e.g. in connection to the figures), or a polymer grade corresponding to such a blend.

High density polyethylene, HOPE, and medium density polyethylene, MDPE, suitable for the inside polymer multilayer portion in the laminated packaging material of the invention has a density of 930 to 970 kg/m³. Up to 2 mol% comonomer content is typical in these polymers of linear type polymer molecules. The lack of long chain branching is ensured by an appropriate choice of catalyst (e.g. ZN catalysts) and the reaction conditions.

MDPE may have a medium level of density, typically ranging from 0.926 to 0.940 g/cm³, while HDPE may have a higher density, typically ranging from 0.941 to 0.965 g/cm³.

A suitable paper substrate for the invention is purely fibrous in nature, which is preferred from a recycling and re-pulpability point of view, in comparison to substrates comprising high proportions of fibrillar cellulose (so-called microfibrillar cellulose, MFC, alternatively called nanofibrillar cellulose, NFC). The paper substrates suitable for the invention are thus preferably not comprising more than 10 weight-%, such as not more than 5 weight-% of fibrillar cellulose, i.e. of loose fibrils of cellulose. Fibrillar cellulose, or a paper substrate having 10 weight-% or more of fibrillar cellulose, is not considered a "fibrous" material and does not have as good dewatering capability in repulping and recycling as fibrous cellulose materials.

For definition, nano-crystalline cellulose, NCC, is a form of nanocellulose but is not the same as "microfibrillar cellulose", "MFC" or "nanofibrillar cellulose", NFC".

MFC/ NFC may thus contain longer particles, so-called "fibrils" having a width of 10-1000 nm, and a length of at least 1 µm, such as up to 10 µm, such as up to 100 µm.

Both MFC and NFC have an aspect ratio of 50 or above, while NCC/ CNC may be defined to have an aspect ratio below 50, e.g. in accordance with ISO/TS 20477:2017 and the draft TAPPI norm WI3021.

The term "NCC", is used for shorter particles and "rod-like" particles, having a width of 3-100 nm, and a length from 100 to above 1000 nm, such as from 100 to 3000 nm, such as from 100 to 1000 nm, such as from 100 to 500 nm. NCC particles may be from 100 to 500 nm length, such as from 100 to 200 nm and with a small width of from 3 to 100 nm.

Inorganic particles suitable for blending in any of the dispersion coatings in impregnation, pre-coating or gas barrier coatings, may preferably have a laminar shape, i.e. have an aspect ratio such that the particles may be aligned within the coating as overlapping flakes or lamellae, to further provide barrier properties against migrating molecules, such as oxygen gas, water vapour and other substances, by slowing them down along a longer path around and between the particles. They may alternatively, or also, include more round inorganic particles, or a combination of differently shaped particles, which may be tightly packed together within the coating.

A paper substrate may be designed to have a high density, and low porosity, by application of high pressure during its manufacturing process. Typically, densification may take place by calendering, preferably supercalendering. Densities above 850 kg/m³, preferably from 900 to 1400 kg/m³, more preferably from 1000 to 1400 kg/m³, can be obtained by such calendering, i.e. high-pressure roller treatment through multiple roller nips. Such a high-density paper substrate may constitute a good substrate for subsequently applied, thin gas barrier coatings of uniform quality, thanks to its obtained lower porosity and higher density. Depending on how the paper substrate is made, it may contribute with further advantageous properties for the use in laminated packaging materials.

In an embodiment of such a higher density paper substrate, the substrate is a paper impregnated with a water soluble or water dispersible polymer, such as polyvinyl alcohol, PVOH, modified PVOH, such as aqueous ethylene-modified polyvinyl alcohol, EVOH_{aq}, starch, starch derivatives, modified starch materials, carboxymethyl cellulose, hydroxyethyl cellulose, and blends of two or more thereof. Optionally, the aqueous polymer dispersion or solution may contain a low amount of inorganic particles or pigments. Such a high-density paper substrate may for example first be impregnated with a water-soluble polymer and subsequently be treated in a supercalendering treatment. In this way, the fibre matrix impregnated with polymer may be compressed and densified, such that an interlocked fibre-composite without, or with significantly reduced, porosity is obtained. Moreover, such an impregnated paper substrate can obtain a higher density to avoid air-filled pockets and cavities in the substrate. This may be advantageous in subsequent processes of vapour deposition coating of barrier coatings on the substrate.

In a further embodiment, at least the top surface (i.e. the surface to be coated) may first be pre-coated with a pre-coating layer, such as a starch-based pre-coating or a clay-coat, and optionally, subsequently be treated in a supercalendering treatment, to compress and densify at least the surface of the paper substrate. The paper substrate may thus be pre-coated with an aqueous composition comprising a polymer selected from the group consisting of starch, starch derivatives, modified starch, cellulose ethers such as carboxymethyl cellulose and hydroxyethyl cellulose, and blends of two or more thereof. In another embodiment, the paper substrate may be pre-coated and densified with a clay-coat composition, comprising a polymer binder and a high proportion of clay and/ or inorganic particles, such as calcium carbonate. The polymer binder may advantageously be a latex binder, thus providing some flexibility and ductility to the coating composition, such as SA-latex, SB-latex or other latex formulations, including bio-based latex polymers, such as starch-based latex compositions. Depending on the pressure and the treatment process, the paper substrate may be compacted to result in a high-density substrate with a density above 850 kg/m³, such as preferably above 900 kg/m³, such as above 1000 kg/m³.

Generally, to be suitable for a final barrier-coating step by means of a vapour deposition coating process, such as a vacuum deposition coating process, the paper substrate needs to be thin and have a low grammage weight of 75 g/m² or below, such as 70 g/m² or below, preferably 60 g/m² or below, such as 50 g/m² or below, preferably 45 g/m² or below, as measured according to ISO 536:2019, for reasons of efficiency and production economy. On the other hand, fibrous cellulose substrates thinner or with a lower grammage than 30 g/m² may be mechanically too weak and/or less dimension stable, when they are coated with wet dispersions and subsequently dried, thus exhibiting shrinkage or curling problems or even web breaks. It is thus preferred to use paper substrates having a grammage of from 30 to 75 g/m², such as from 30 to 65 g/m², such as from 35 to 60 g/m², such as from 35 to 55 g/m², such as from 35 to 50 g/m², as measured according to ISO 536:2019.

It may be advantageous to use an as thin as possible paper substrate, because then less polymer may be needed in adjacent liquid-tight, heat-sealable material layers to maintain polymer layer integrity due to reduced strain upon folding. The thickness of the paper substrate may be from 25 to 95 µm, such as from 25 to 90 µm, such as from 25 to 80 µm, 35 to 75 µm, such as from 35 to 70 µm, such as from 35 to 60 µm, such as from 35 to 55 µm, such as from 35 to 50 µm.

In an alternative embodiment, a suitable paper substrate for carrying at least one gas barrier coating, is made essentially of cellulose fibres laid together to form a fibrous sheet or paper of lower density, meaning that in between the fibres there will normally be cavities, pockets or porosities filled by air. Such a fibrous, porous, cellulose substrate may have a relatively low density from 700 to 850 kg/m³, such as from 700 to 800 kg/m³. Such a relatively low density is normally achieved by not compressing the cellulose fibres together too much in the substrate and by using only fibrous cellulose, as distinguished from fibril or crystal variants of cellulose, i.e. so-called nanocellulose or micro-fibrillar cellulose (MFC), to ensure consistent porosity between the fibres in the interior of the substrate. A fibrous and porous paper may be readily recycled to a fibre recycling stream, such as a used beverage carton (UBC) recycling stream. If such a fibrous and porous substrate can still be provided with a dense and smooth surface, i.e. compacted surface, such as by a flexible pre-coating composition, such as a polymer latex or a clay-coat, and subsequently treated by calendering or surface-glazing, it may also be a good substrate for the purpose of the present invention.

Papers or paper substrates suitable of the invention may have a roughness of its coatable surface (top side or print side) lower than 200 ml/min Bendtsen, such as 180 ml/min Bendtsen or below, such as 150 ml/min Bendtsen or below, such as 130 ml/min Bendtsen or below, such as 120 ml/min or below, such as 100 ml/min or below, such as 80 ml/min or below, such as 50 ml/min or below, such as 30 ml/min or below, such as 25 ml/min or below, as measured according to ISO 8791:4, to work better for barrier coating at industrially viable, high-speed operations. At below 50 ml/min, such as below 30 ml/min Bendtsen, the substrate surface is very smooth and a very thin coating of 0.5 g/m² of a thermostable polymer or composition may be applied and dried at high speed with good layer formation of the coating material.

If the surface roughness, measured as Bendtsen value in ml/min, is too high, there may be "valleys" and "peaks" in the surface of the cellulose-based material, such that a thinly applied wet coating of an aqueous solution of the gas barrier polymer, may not be able to fill and level out the "valleys" and still also cover the "peaks". In such cases, the applied and dried coating of a gas barrier coating or of a gas barrier polymer may not fully cover the surface, but obtain defects, through which oxygen gas molecules may easily permeate through the coating. A rougher substrate surface naturally requires more polymer coating to be applied, which is possible to apply at lower coating line speeds. At high coating speeds, however, there are limits to how much aqueous coating may be applied, to how much water may be evaporated in a drying operation and to how high viscosity and solid content the aqueous barrier polymer solution can have. In such a case the paper surface may not be a good substrate for a thin gas barrier coating and a subsequent metallization coating and may thus first need a smoothening pre-coating to form a proper foundation for the subsequent barrier coatings.

Advantageously, the paper substrates may have a Cobb 60 surface water absorption value of 40 g/m² or lower, preferably 30 g/m² or lower, such as 25 g/m² or below, as measured according to ISO 535:2014, on its coating side ("top side" or "print side"), for the purpose of functioning better in high-speed coating methods of the barrier-coated structures according to the present invention, under viable industrial conditions.

The Cobb 60 method according to ISO 535:2014 measures the water absorption of the paper substrate under standardised conditions and is in a way a measure of "coatability" of the paper substrate surface, i.e. the ability to be coated by an aqueous solution composition of a gas barrier polymer. If the surface can absorb too much of the solution before drying, the thinly applied wet coating will be broken and cannot form a continuous coating of the gas barrier polymer. Accordingly, it is preferred that the Cobb 60 value is lower than 30 g/m², such as lower than 28 g/m², and preferably not higher than 25 g/m².

The surface of the top side of the paper substrate may thus preferably exhibit a Bendtsen roughness value lower than 30 ml/min and a Cobb 60 absorption value of 25 g/m² or lower.

In a further embodiment, the surface of the top side of the paper- or paper substrate may exhibit a Gurley porosity value greater than 1000 s/dl, such as greater than 2000 s/dl, according to Tappi T460 om-2. The advantage of the surface having a low porosity is that less aqueous solution of the gas barrier polymer will be absorbed into the paper substrate. Since a dispersion coated aqueous composition of the gas barrier coating may be very thin, this may be important for the internal coherence of the coating as well as for the ability of the coating to form a smooth and even surface for receiving further coatings or layers there onto.

Thus, in a paper substrate more suitable to be coated with a thin coating of an aqueous dispersion composition, the number and the size of pores in the substrate material should preferably be significantly reduced. By extensive refining of the pulp used for manufacturing of the substrate, the degree of fibre bonding will increase and thus reduce the porosity.

Greaseproof paper is produced by such extensive refining and has sufficiently low porosity to provide a grease barrier. Greaseproof paper has thus also been seen as a potential substrate or carrier for an additional gas-barrier coating. The resulting pulp has, however, high dewatering resistance and demands long time for stock dewatering and is both costly in its manufacturing process and undesired in repulping and recycling processes. The same is valid regarding parchment papers, which in their manufacturing acquire gelatinized fibres by passing a bath of sulphuric acid, which makes the fibres less dewaterable and re-pulpable, and moreover the parchment papers acquire undesired brittleness. Such paper substrates are less suitable in sustainable, recyclable laminated packaging materials.

According to a preferred embodiment, the paper substrate for the use of the invention, may be formed from cellulose fibres comprising predominantly chemical pulp, such as Kraft pulp or sulphite pulp. Sulphate or sulphite pulp is used to obtain a paper that is tough enough for downstream processes, such as coating at high line speed, but also converting lamination and use of the final package. Preferably, the cellulose fibre composition is to 100 % manufactured by a chemical process. A small amount of chemi-thermomechanical pulp, or possibly even mechanical pulp, may be included, such as from 0 to 10 weight-% of the total fibre content. The cellulose fibre composition may thus comprise from 90 to 100 weight-% of cellulose fibres manufactured by a chemical pulping process, based on the total fibre content.

Sulphate/kraft pulp is thus preferred since it is widely produced in large quantities and is advantageous for improved repulping in recycling, and general dewatering of the fibres. Sulphite fibres normally have a higher proportion of refined fibres, which may have an effect slightly to the contrary depending on the proportion in a total cellulose mix and on the degree of refinement. A major proportion of Kraft pulp is thus preferred, and 100 % Kraft pulp is more preferred from the repulping and recyclability point of view.

For recyclability and good dewatering ability, the fibres of the paper substrate may have a Canadian Standard Freeness (CSF) above 200 ml, such as higher than 300 ml, such as higher than 350 ml, such as higher than 400 ml, such as higher than 450 ml, as measured by ISO 5267-2:2001.

Softwood fibres provide strength and toughness properties in the resulting paper and may be comprised in the pulp composition by at least 65 wt%, such as by 70 to 100 wt%, such as by 80 to 100 wt%, such as by 90 to 100 wt% Kraft cellulose fibres, by dry weight of the pulp used to form the paper substrate, such as unbleached Kraft cellulose fibres. The remaining part of the pulp fibre composition may thus comprise hardwood fibres. A high content of softwood fibres ensures ease of repulping in recycling processes, and enables a circular economy of cellulose fibres, wherein the softwood fibres can deliver through several cycles and be reused again.

A further benefit of including softwood pulp is an improved runnability in the paper machine and beneficial strength/toughness properties in the resulting paper. A relatively high proportion of softwood pulp may facilitate runnability in the paper machine, reducing the risk for web breaks and without causing problems in dewatering during the manufacturing of the substrate as well as enabling repulping in recycling operations. The degree of refinement of the fibre compositions is further chosen to promote both dewatering and repulping abilities, and at the same time the formation of a dense paper with lower porosity.

A different type of paper substrate, less suitable for use in the invention may comprise low molecular celluloses such as microfibrillar cellulose, MFC, nanofibrillar cellulose, NFC, or nanocrystalline celluloses, NCC, within its fibrous structure. The inclusion of such low-molecular cellulose would fill voids and pores in the fibrous cellulose, to densify the structure.

To the latter type of paper substrates belong also so-called MFC films, which comprise in the majority micro/nano-fibrillar cellulose and may have more the character of a polymer film although being mainly made up from fibrillar cellulose molecules, and which are thus not made from regenerated cellulose. Such substrates may be possible to re-disperse in water, i.e. are re-pulpable, as opposed to a film of regenerated cellulose, and are thus also at least partly recyclable to a fibre-based recycling stream, however it may require significantly longer re-pulping time than a fibrous cellulose substrate, such as a conventional paper.

As explained above, for recyclability and repulping of cellulose fibre streams, it is thus preferred that the cellulose-based materials contain only low contents of cellulose in a fibrillar form, such as less than 5 weight-% and preferably no content of fibrillar cellulose.

Thus, whereas some substrate papers exist, which have inherent, good oxygen barrier properties, those are for other reasons, such as low recyclability (repulpability), less preferred for the final materials, and there is a need to be able to provide a major contribution of oxygen barrier properties by coating materials, to be applied and well bonded to, and well interacting with, the substrate surface.

To have good mechanical properties for coating at high coating line speeds above 300 m/min, such as at above 400 m/min, the paper substrate may have a tensile strength from 3.5 to 7 kN/m in the MD (machine direction) and from 1.5 to 3.5 kN/m, in the CD (cross direction). In the present disclosure tensile strength is measured according to ISO 1924-3:2005. A higher tensile strength may thus indicate a paper substrate, useful to withstanding web handling forces during coating and lamination operations.

Further, the E Modulus of the paper substrate may be from 9500 to 16000 MPa in the MD, and from 4000 to 8000 MPa in the CD.

Bleaching of the pulp is common in papermaking to achieve a higher brightness and whiteness of the paper. A higher brightness may be of importance to improve the printability of the paper in some applications, such as in papers used for publishing, printing, and advertising. Examples of bleaching processes are chlorine-based bleaching and chlorine-free bleaching, such as oxygen delignification in combination with hydrogen peroxide or using ozone as the main bleaching agents. Bleaching of paper also has some drawbacks, e.g. chlorine based bleaching is known to release toxic pollutants, such as dioxins, and is thus harmful to the environment. In addition, the chlorine-free bleaching methods are adding a significant cost to the papermaking. Bleaching may also influence the physical properties of the fibres by degradation of carbohydrates in the fibre matrix. This may lead to a loss of strength in the fibres and also a loss of fibre length.

Toughness can be described as the amount of energy or work needed to be applied to the paper substrate in order to locally initiate a crack close to a defect that may induce a local strain concentration, a subsequent propagation of the crack and at the end create fractured surfaces and fully separated material. A very tough paper substrate can thus be exposed to a high level of load and elongation before the material eventually fails in separation. If the material is able to distribute the locally induced strain concentration over a larger deformation area, instead of crack initiation and propagation, more energy is needed as the deformation area grows. The more load and elongation, i.e. energy, that a material can survive the more ductile the material is. Locally induced strains, and the ability to distribute the strains, is of high importance for non-homogeneous and non-isotropic materials as paper.

In addition to the reasoning about importance of good fibre bonding for the toughness of the paper substrate the amount of non-fibrous particles, e.g. shives and larger particles, should be small enough to reduce the number of local strain concentrations and their resulting defects. Furthermore, both the length and strength of individual fibres play a role for the toughness as long and strong fibres act as bridges over local defects and strain concentrations, thus increasing the ductility of the paper substrate. Long fibres are also beneficial for the recycling value, since fibres tend to be shortened in mechanical recycling, thus longer fibres can be used in a higher number of cycles before being too short to be useful in a recycled paper.

The measure of toughness of paper is given by the tensile energy absorption, TEA, J/m², or tensile energy absorption index, J/g, according to ISO 1924-3:2005. For a paper substrate to withstand mechanical load upon fold-forming of packages it should have a tensile energy absorption index, TEA Index, Geometrical Mean, GM, above 1.3 J/g as measured at 50 % RH and 23 °C according to ISO1924-3:2005, and a tensile energy absorption index ratio, CD to MD, of 1.1 to 2, such as 1.2 to 2, such as 1.3 to 2, such as 1.4 to 2, as measured at 50 % RH and 23 °C according to ISO1924-3:2005.

The ratio between the TEA Index in cross direction of the web, CD, to machine direction, MD, should preferably be closer to 1 than being too high, as in fold-forming of a laminated carton packaging material, the areas of double and biaxial folding are loaded and strained in the material and the paper substrate in both directions.

The TEA Index, GM, may be higher than 1.4 J/g, such as higher than 1.5 J/g, such as higher than 1.6 J/g, such as higher than 1.7 J/g.

When the TEA Index GM is lower, such as from 1.3 to 1.5 J/g, then it may be important that the ratio CD:MD of the TEA Index should be closer to 1 than to 2. When the TEA Index GM is higher, such as above 1.5 J/g, such as above 1.6 J/g, such as above 1.7 J/g, then the ratio CD:MD of the TEA Index may also be higher, such as from 1.4 to 2 or 1.5 to 2. The combination of the properties of TEA Index GM and the TEA Index CD:MD ratio together describes the properties of a crack-resistant paper rather well.

A further and still better way of characterizing the capability of a paper to resist failure due to external load, resulting in paper cracks, is to measure the parameter of Total Tensile Energy Absorption, TTEA, as described herein. It measures the whole amount of energy needed to transform an unfolded, intact paper to a folded paper exhibiting fully separated fibres due to failure and cracking, thus including the first elastic part of the folding operation, in which the paper is still within its early folding state exhibiting a "spring-back" behaviour. It also captures the descending part of the stress-strain curve after the paper sample in the tensile tester has reached a state of peak stress, thus including also the part of evolving damage until complete failure and separation of the paper sample.

As seen in Table 1, the TTEA measurement provides a significantly higher value of the paper substrate of Inventive Example 1 than of the Comparative Examples. As shown further below, this significantly higher value of Total TEA reflects in a better way the significantly better mechanical performance of the paper substrate of Inventive Example 1 in laminates and packages formed therefrom. Thus, the paper substrate of the Inventive Example 1 exhibits a TTEA GM (geometrical mean) value higher than 20 Nmm, preferably higher than 25 Nmm, more preferably 30 Nmm or higher.

The moisture content in the paper substrate may be of high importance to further improve the resistance to cracks. Moisture in fibrous and porous materials as paper is absorbed and desorbed in the fibres from the capillary air space within the paper, due to the hydrophilic nature of cellulose. At various relative humidities paper holds different amount of water and will absorb or desorb water until it comes to equilibrium with the surrounding climate. The larger the fibre area the more water friendly sites are available for absorption of water and thus promotes the equilibrium moisture content in the paper substrate. Well separated fibres, i.e. a paper substrate with an amount of fibre bundles, will results in an increased available fibre area for water absorption and may thus result in a higher equilibrium moisture content. Moisture also has a softening effect on cellulose and a higher moisture improves the ability to elongate a paper substrate, i.e. improving the toughness.

Equilibrium moisture content is given in % moisture by weight of paper and measured according to ISO 287:2017, at 50 % RH and 23 °C, as conditioned according to ISO 187:2022. The paper substrate to be used in fold-formed packages suitably has an Equilibrium moisture content, Eq. MC from 7 % to 10 %, preferably from 7 to 9 %, as measured according to ISO 287:2017, at 50 % RH and 23 °C, as conditioned according to ISO 187:2022.

Refining of pulp is an operation used in papermaking to enhance key properties of the pulp, such as fibre flexibility and ability to retain water, by increasing the available surface area on the fibres, for bonding. The method may involve two discs rotating in opposite directions to shear and thereby refine the pulp. The degree of refining depends on various factors such as the raw material quality, consistency (the ratio of fibres in the slurry being made of water and fibres), the disc rotation speeds, the gap between the discs, and the refining time. The purpose of refining is to break down the fibre bundles to separate them to individual fibres, making them more flexible and to fibrillate the fibre surfaces, substantially without generating loose fibrils. This thus results in fibres with a higher surface area which is promoting bonds between the fibres. Being more flexible they more easily conform around each other which also promotes bonding. In addition, with an increased fibre surface area more water friendly sites are available for absorption of water which increases the ability of the fibres to hold water.

While refining can improve the pulp it can also have the effect of slowing down the production speed in papermaking. If too heavily refined the fibres may contain and hold so much water that it makes it time consuming to dewater the fibre slurry.

The degree of refining is measured by the Canadian Standard Freeness, CSF, according to ISO 5267-2:2001.Suitably, the cellulose fibres of the paper substrate exhibit a Canadian Standard Freeness, CSF, value from 200 to 500 ml, such as from 200 to 450 ml, such as from 200 to 400 ml, such as from 200 to 350 ml, as measured according to ISO 5267-2:2001, after laboratory wet disintegration according to ISO 5263-1:2004.

The paper substrate may be calendered and surface treated, to provide a smooth paper surface, such as by machine finishing, MF, which may be a stepwise treatment to dry and smoothen the surface, while drying the paper gently to preserve some ductility in the paper.

The paper substrate may first be pre-coated with a pre-coating layer beneath a subsequently applied gas barrier coating. The pre-coating layer may be applied by means of aqueous solution or dispersion coating and subsequent drying. A lower-density substrate, or a substrate having a top surface with high roughness, may for example advantageously be first pre-coated with a composition comprising a polymer binder and, optionally, inorganic particles or pigments.

Examples of binders for smoothening pre-coating layers may be aqueous compositions of starch, starch derivatives or modified starch, or cellulose-ethers, such as carboxy-methyl cellulose (CMC) or hydroxyethyl cellulose (HEC). In combination with a subsequent calendering treatment, a dense and smooth substrate surface may be provided. The advantage of such a pre-coating, is that only cellulosic or non-fossil (plant-based) materials are used in the substrate, while obtaining a denser and smoother substrate surface. Such pre-coatings are also readily redispersible and repulpable to an aqueous fibre recycling stream. The pre-coating Is applied in an amount from 1-10 g/m², such as from 2 to 8 g/m², such as from 3 to 5 g/m².

In another embodiment, an advantageous example of a densifying and smoothening pre-coating layer is a pre-coating of an aqueous composition of a latex binder and inorganic particles. It may add flexibility and ductility to a paper, which supports fold-forming in the conversion from planar laminated packaging material into fold-formed, cuboid packaging containers.

A suitable pre-coating layer may comprise from 30 to 96 weight-%, such as from 40 to 96 weight-%, such as from 50 to 96 weight-%, such as from 55 to 96 weight-%, such as from 60 to 96 weight-%, such as from 65 to 96 weight-%, such as from 70 to 96 weight-%, of the inorganic particles and from 4 to 70 weight-%, such as from 4 to 60 weight-%, such as from 4 to 50 weight-% such as from 4 to 45 weight-%, such as from 4 to 40 weight-%, such as from 4 to 35 weight-%, such as from 4 to 30 weight-%, of a polymer binder and further additives, based on dry weight. The pre-coating layer may thus be a so-called clay-coat or pigment coating, and has the purpose to provide a smooth, dense and flexible surface applied onto a fibrous cellulose substrate. The pre-coating layer acts both to resist steam expansion of moisture entrapped in the air pockets of the fibrous cellulose substrate and to provide an optimal surface for further coating with gas barrier layers, and to altogether provide good oxygen barrier in a packaging container, i.e. also after fold-forming and heat sealing a laminated packaging material comprising the barrier-coated paper substrate into a packaging container.

The inorganic particles or filler material may comprise various inorganic particles, such as clay minerals, silica particles, talcum, and calcium carbonate. The thus dispersion-coated and dried layer of such a pre-coating layer may act as a barrier to migrating small molecules, such as water vapour, but may also act more efficiently as a barrier to resist sudden expansion of water vapour, i.e. steam blisters bursting towards the layer of the steam-resistant gas barrier coating from the adjacent substrate layer of fibrous cellulose.

In an embodiment, the inorganic particles comprise laminar particles, which may contribute further to barrier properties in the material, by the creation of overlapping mineral flakes or lamellae, thus preventing migration of small molecules through the material. Such laminar inorganic particles may be selected from clays, such as kaolin clay or bentonite clays, silicates, and talcum particles.

The polymer binder of the pre-coating layer may be an aqueous emulsion binder, such as selected from the group consisting of aqueous emulsions of acrylic or methacrylic homo- or co-polymers, such as styrene-acrylate latex, vinyl acrylic copolymer latex or vinyl acetate acrylate copolymer latex, and of styrene-butadiene copolymers, such as styrene-butadiene latex, and of biobased emulsion binders, such as modified starch latex, and of vinyl alcohol polymers, such as polyvinyl alcohol, PVOH, or (ethylene-) modified PVOH (also called dispersion coatable ethylene vinyl alcohol, EVOH_{aq}, to be clearly distinguished from melt processable EVOH with significantly higher ethylene content), and of other starch, modified starches or starch derivatives.

The pre-coating layer may be applied by means of aqueous dispersion coating at an amount of from 5 to 25 g/m², such as from 7 to 22 g/m², such as from 7 to 20 g/m², such as from 7 to 19 g/m², such as from 10 to 20 g/m², such as from 10 to 19 g/m², dry weight.

After dispersion coating and drying of the aqueous pre-coating layer, the surface of the pre-coated, fibrous cellulose substrate is smoothened and compacted, such as by calendering, such as supercalendering to provide a higher density substrate, to obtain optimal surface properties, i.e. smoothness and low porosity, for receiving further coatings of gas barrier materials.

The free, dried surface of the pre-coating layer as measured after such soft calendering may have a surface roughness below 150 ml/min Bendtsen, such as below 100 ml/min Bendtsen, such as below 80 ml/min Bendtsen, such as below 50 ml/min Bendtsen, such as below 30 ml/min Bendtsen. Preferably, the surface roughness is very low and can be measured to exhibit values below 3 µm, such as below 2.5 µm, such as below 2 µm, such as 1.5 µm or lower, such as 1.2 µm or lower, such as 1.0 µm or lower, as measured according to ISO 8791-4:2021 (PPS). Such level of smoothness is improving the film formation of subsequently applied gas barrier coatings, thus providing as high gas barrier as possible.

It is further believed that the inherent flexibility of a pre-coating layer supports any subsequently applied, less flexible, barrier coatings, to stay coherent as well as adherent upon folding of the barrier-coated paper substrate.

The polymer of the pre-coating layer may be selected to exhibit a glass transition temperature from -30 to +30 degrees Celsius, such as from -30 to +20 degrees Celsius, to provide inherent flexibility to a paper.

The free, uncoated surface of the pre-coating layer applied on the paper substrate also may have a low porosity, measured as a Gurley air resistance above 1500 s /100 ml, such as above 3000 s/100 ml. A low porosity further improves the film formation of subsequently applied gas barrier coatings, in that no or very low amounts of the oxygen gas barrier composition liquid is absorbed into the fibrous material at the surface of the substrate.

The paper substrate may further have a second pre-coating layer on its opposite side, which may be of the same type as the pre-coating on the first side of the substrate.

The pre-coating layer may be applied by means of suitable dispersion coating techniques, such as blade coating, rod coating, bar coating, smooth roll coating, reverse roll coating, lip coating, air knife coating, curtain flow coating, dip coating and slot die coating methods, and subsequent drying to evaporate the dispersion medium, normally water, by forced convection drying. A pre-coating layer having high content of inorganic particles is suitably applied by blade coating, roll coating or rod coating technology and subsequent drying. The term aqueous dispersion coating includes thus coating of aqueous compositions of binder polymer emulsions, dispersions, suspensions, solutions, and latex formulations, further comprising a substantial amount, such as more than 50 weight-% of more of pigments, inorganic particles, or other filler material.

For the present invention, an impregnation of the paper seems preferable over a mere pre-coating, as the surface porosity needs to be brought down. This may be achieved in part by including some hardwood fibres in the fibre composition, and in part by impregnating the paper in the manufacturing process, such as by size pressing, with a water soluble polymer, such as starch or CMC. It seems preferred to select a fully renewable polymer for the purpose. Generally however, polymers for such aqueous dispersion impregnation are selected from the group consisting of vinyl alcohol polymers, such as polyvinyl alcohol, PVOH, aqueous ethylene-modified polyvinyl alcohol, EVOH_{aq}, starch, starch derivatives, modified starch, carboxymethyl cellulose and hydroxyethyl cellulose, and blends of two or more thereof. Optionally, the aqueous polymer dispersion or solution may contain a low amount of inorganic particles or pigments.

Preferably, the gas-barrier coated paper substrate does not need to have any pre-coating or impregnation and can be directly coated with an aqueous gas barrier coating composition, such that the gas barrier coating is directly adjacent and contiguous to the paper substrate. The gas-barrier coated substrate is subsequently to be deposition coated with a vacuum deposition coating of metal of metal oxide, such as preferably an aluminium metallization coating, such as an oxygen-enriched barrier aluminium metallization coating. Such a coating configuration provides the least complex and most cost efficient barrier-coated paper substrate.

The aqueous gas barrier coating may comprise from 65 to 100 weight-% of a polymer material selected from the group consisting of polyvinyl alcohol, PVOH, modified polyvinyl alcohol, such as aqueous ethylene-modified polyvinyl alcohol, EVOH_{aq}, starch, starch derivatives, modified starch materials, xylan, xylan derivatives, nanofibrillar/ microfibrillar cellulose, NFC/ MFC, cellulose ethers, and blend compositions of any two or more thereof, and from 0 to 35 weight-% of inorganic particles, based on the total dry weight of the gas barrier coating. Such polymer materials are water dispersible and in mostly renewable, i.e. of non-fossil origin

More specifically, the aqueous gas barrier coating may comprise a polymer selected from the group consisting of vinyl alcohol polymers and copolymers, such as from the group consisting of polyvinyl alcohol, PVOH, modified polyvinyl alcohols including ethylene-modified polyvinyl alcohol i.e. EVOH_{aq}, starch, starch derivatives, modified starch and blends of two or more thereof. Such polymers are most suitable as gas barrier coatings, as they exhibit very good thermostability in heat sealing operations of laminated materials comprising a thus barrier-coated paper substrate.

In a more specific embodiment, the aqueous gas barrier coating comprises a polymer selected from the group consisting of starch and vinyl alcohol polymers and copolymers, such as a polymer selected from the group consisting of polyvinyl alcohol, PVOH, modified PVOH polymers, including ethylene-modified polyvinyl alcohol i.e. EVOH_{aq},, starch, starch derivative, modified starch, and blends thereof.

In a further specific embodiment, the aqueous gas barrier coating comprises a polymer selected from the group consisting of vinyl alcohol polymers and copolymers, such as a polymer selected from the group consisting of polyvinyl alcohol, PVOH, and modified PVOH, including ethylene-modified polyvinyl alcohol i.e. EVOH_{aq},.

The gas barrier coating may comprise from 95 to 100 weight-%, such as from 97 to 100 weight-%, such as from 98 to 100 weight-%, such as from 99 to 100 weight-%, of a gas barrier polymer selected from polyvinyl alcohol, PVOH, or modified polyvinyl alcohol, per weight of dry polymer content, in the gas barrier coating. It is advantageous to use a pure or substantially pure gas barrier coating polymer of PVOH, because it provides good film formation properties, excellent gas barrier properties, cost efficiency, food compatibility and odour barrier properties. Small amounts of additives or modifying or processing agents may be included in the aqueous gas barrier composition.

Most preferably, the gas barrier coating comprises a gas barrier polymer selected from polyvinyl alcohol, PVOH, or modified polyvinyl alcohol at from 95 to 100 weight-%, such as from 97 to 100 weight-%, such as from 98 to 100 weight-%, such as from 99 to 100 weight-%, per weight of dry matter, in the gas barrier coating.

In a further specific embodiment, the aqueous oxygen gas barrier composition of the at least one gas barrier layer comprises starch, starch derivative or modified starch.

The gas barrier coating layer may generally be applied by means of aqueous dispersion or solution coating at a total grammage from 0.5 to 3 g/m², such as from 0.5 to 2 g/m² dry weight. Higher grammages also generally require higher drying capacity, or processing at lower coating speed, to remove more water from the aqueous coating compositions. Lower grammages are not capable of providing sufficient smoothness and thermostability, while higher grammages normally make the coatings more brittle and prone to cracking upon fold-forming of the substrate and the laminated packaging material.

The gas barrier coating may suitably have a composition comprising from 65 to 100 weight-%, such as from 70 to 100 weight-%, such as from 80 to 100 weight-%, such from 90 to 100 weight-%, of a polymer material selected from the group consisting of polyvinyl alcohol, PVOH, and modified polyvinyl alcohols, and from 0 to 35 weight-%, such as from 0 to 30 weight-%, such as from 0 to 20 weight-%, such as from 0 to 10 weight-% of an inorganic, laminar compound, based on the total dry weight of the gas barrier coating.

Suitable inorganic compounds to be used in any embodiment of the invention may be laminar inorganic particles, such as talcum particles, or clay particles having a high aspect ratio, such as bentonite or kaolin. Such flake-shaped particles may be organized in a layered structure in a dispersion coating at the time of application onto the substrate, such that any migrating molecules (such as oxygen, water vapour and other low-molecular substances) through the coated layer must follow a longer, so-called "tortuous path" through the layer, and practically be blocked, by being slowed down, from passing through the layer. The more thorough exfoliation of the clay particles, the better such migration barrier properties will be.

The PVOH or modified polyvinyl alcohol used in the gas barrier coating preferably has a degree of hydrolysis of 98 mol-% or higher, such as of 99 mol-% or higher, both from oxygen barrier point of view and for good heat sealing results. Better coating results may be obtained when the PVOH or modified PVOH has a higher molecular weight (and thereby a higher viscosity in aqueous solution or dispersion), than a lower.

In a preferred embodiment, the PVOH may be Poval^{®} 15-99. Suitable grades of modified PVOH to be coated in the method of the invention may be Exceval^{®} 4104 AQ, which has similar coatability properties to Poval^{®} 6-98, and Exceval^{®} HR-3010, which has similar coatability properties to Poval^{®} 15-99. The modified PVOH polymers are mainly modified by a low comonomer content of ethylene from 3 to 15 mol-% and are also referred to as EVOH, ethylene vinyl alcohol, polymers. They are clearly different from melt processable (e.g. suitable for melt extrusion coating and lamination) EVOH, however, which have significantly higher ethylene contents from 30 mol-% and above.

For better induction heat sealability and induction heating durability, at critical areas of e.g. transversal sealing areas where the materials overlap, and also in view of better oxygen barrier properties, the gas barrier coating may be applied to a total amount from 0.5 to 2.5 g/m², such as from 1.0 to 2.1 g/m², such as from 1.0 to 2.0 g/m², such as from 1.1 to 2.0 g/m², such as from 1.0 to 1.8 g/m², such as from 1.1 to 1.8 g/m², such as from 1.2 to 1.8 g/m², such as from 1.2 to 1.7 g/m², such as from 1.3 to 1.7 g/m², based on dry weight.

Methods suitable for coating of low dry-content gas barrier coating polymer dispersion/ solution compositions are broadly any suitable wet coating methods, such as gravure roll coating, smooth roll coating, reverse roll coating, wire bar coating, blade coating, lip coating, air knife coating, and curtain flow coating methods. Smooth roller coating, such as flexo coating or semi-flexo smooth roller coating, is preferred for best possible gas barrier coating quality in the present invention.

It is important that the coating applied is evenly coated, forming a continuous and coherent film on the surface and furthermore being defect-free, i.e. substantially without pinholes, blisters or coating misses. Even if a defect is very small, its effect on the barrier properties may be negative, which is not desirable. In non-foil packaging materials, i.e. materials without a thick metal foil that can ensure good barrier properties in general, it is very important to reduce the defects of the very thin and more sustainable material coatings to a minimum. It is advantageous to apply at least two coatings on top of each other, to cover and overlap any defects in the separate, thin coating layers.

Advantageously, the aqueous gas barrier coating composition is applied onto the paper substrate by a smooth roller coating method, such as by a flexo(graphic) or semiflexo roller coating method.

It has been concluded that a smooth roller coating method can provide a more even and coherent gas barrier coating layer, than previously seen with gravure or reverse gravure coating methods, in addition to more easily providing coatings having fewer defects, such as pinholes. The aqueous solution of PVOH could be applied with a higher viscosity and at a lower temperature, while foaming of the solution could be kept at a minimum, resulting in a better, coherent film formation having an even thickness throughout the full area extension of the gas barrier coating.

The solid content of the PVOH solution is suitably from 5 to 20 weight- %, such as from 7 to 15 weight-%. Preferably, the PVOH solution may be applied by a smooth roller method at a viscosity from 150 to 500 mPa*s, such as from 250 to 350 mPa*s. Advantageously, a flexo or semi-flexo smooth roller coating method is used with the viscosity of the PVOH solution being from 150 to 500 mPa*s, such as from 250 to 350 mPa*s. Such (semi-)flexo smooth roller coating may be performed at 300 m/min or above with high resulting quality of the gas barrier coating. The number of pinholes and defects in one single PVOH gas barrier coating, applied by a semi-flexo or flexo smooth roller coating method, may be kept at a minimum. The number of defects in the total gas barrier coating layer, which normally is applied by two coating and drying steps, was reduced to a fraction of what could be obtained by reverse gravure coating, even if the settings of the gravure coating method were balanced and optimised to perfection. In comparison to an optimised gravure coating method, the quality of the total gas barrier coating layer resulting from the smooth roller method was thus significantly better and defects were close to eliminated.

To reduce or eliminate bubble- or foam-formation in the aqueous gas barrier polymer solution, a defoaming additive may be added. A suitable defoaming agent is n-octanol, which is both food safe and proved to provide a better effect at low amounts, than other tested agents, such as at a low amount from 0.01 to 0.1 weight-%, such as at about 0.05 weight-%, of the solution.

It is advantageous to dry the wet coated web consistently at low temperatures only, as the wet coatings of aqueous solution of gas barrier polymer are very thin and may be damaged by too forceful heating.

The drying step may be carried out by a hot air dryer, which also allows the water to evaporate and be removed from the surface of the substrate by the air convection. The substrate temperature may be kept constant at a temperature lower than 95 °C, such as lower than 90 °C, such as at from 65 to 90 °C, such as from 65 to 85 °C, such as from 70 to 85 °C such as from 75 to 85 °C, as it travels through the dryer. The drying may be partly assisted by irradiation heat from infrared IR-lamps, if needed at high lines speeds, in combination with hot air convection drying.

The gas barrier coating may be applied as two consecutive coatings with intermediate drying.

The aqueous gas barrier coating composition may in addition to the polymer comprise from about 1 to about 30 weight %, of an inorganic laminar compound based on dry coating weight, such as kaolin, or talcum or exfoliated nanoclay particles, such as bentonite. Correspondingly, the barrier layer may include from about 99 to about 70 weight % of the polymer based on the dry coating weight. An additive, such as a dispersion stabiliser, defoamer or the like, may also be included in the oxygen gas barrier composition, preferably in an amount of not more than about 1 weight % based on the dry coating. The total dry content of the aqueous composition is preferably from 5 to 20 weight-%, such as from 7 to 15 weight-%.

In an embodiment, the gas barrier coating may be applied in two, three or even four consecutive steps with intermediate drying, as part-layers. When applied as two part-layers or "part-coatings", each coating may suitably be applied in amounts from 0.2 to 1.0 g/m² and allows a higher quality total layer from a lower amount of liquid oxygen gas barrier composition. More preferably, the two part-layers may be applied at an amount of from 0.2 to 0.8 g/m² each.

It has been seen that a vapour deposited coating, such as a metallization coating, coated to mere tens of nanometre thickness, first requires a thin but defect-free gas barrier coating or pre-coating of a smoothening polymer applied onto the paper or paper substrate, to provide barrier properties, good sheet resistance and a good quality in the metallization coating itself. A well-functioning polymer for a gas barrier coating may thus be selected from aqueous vinyl alcohol polymers and copolymers, which also have inherent gas barrier properties, and which are food safe and environmentally sustainable both regarding recyclability and in industrial coating and lamination processes. Such polymers are water dispersible and/or dissolvable in water and are applied by means of an aqueous "dispersion coating" process, or a so called "liquid film coating" process.

Starch and starch-based polymers have a good smoothening effect. Generally, however, starch materials have significantly lower gas barrier properties, than PVOH.

For the purpose of high-frequency induction heat sealing, it has recently been understood that starch materials work better as gas barrier coatings for receiving an induction-susceptible metallization layer, as regards standard metallization coatings. Starch materials seem to provide better thermo-mechanical stability in heat sealing operations, but also have a significant smoothening effect such that the initial roughness of substrate surfaces may be less crucial for the quality of subsequently applied thin barrier and metal coatings.

Suitable starch materials for such gas barrier coatings may be oxidised or modified starches suitable for aqueous dissolution at cold or ambient temperature, such as oxidised native potato starch or the like, because such cold water dissolved starches do not form gels in production. Examples of such suitable starch materials are Etenia^{®} or Solvicol^{®} 1290 from Avebe, the Netherlands.

The composition of the gas barrier coating may further comprise inorganic particles or filler material, such as talcum, kaolin and nanoclays, such as bentonite, montmorillonite and the like. The amount of inorganic material may be from 1 to 35 weight-%, such as from 1 to 30 weight-%, such as from 1 to 25 weight-%, such as from 1 to 20 weight-%, such as from 1 to 15 wt-% of the composition of the gas barrier coating, based on solid content.

The aqueous solution of the gas barrier coating composition may be applied evenly onto the surface of the top side of the web of the paper substrate by means of a roll coating method to provide a coating at an amount from 0.3 to 2 g/m², dry weight. Below 0,3 g/m², the starch will provide less of a smoothening effect to the cellulose substrate surface, while above 2, or even 1.5 g/m², the coating will be more difficult to dry and takes more energy and time for evaporating the water from the starch. A good smoothening effect is achieved by starch at 0,5 g/m² and above, and a good balance between coating layer quality and cost efficiency, is achieved at coating layers from 0,5 to 0.8 g/m². Often, a thicker coating of the starch material is desired in total, and thus at least one further coating step is added after the drying of a first coating layer has been completed.

Thus, the gas barrier coating may be applied in two consecutive steps with intermediate drying, as two part-layers. When applied as two part-layers, each layer is suitably applied in amounts from 0,2 to 1 g/m², such as from 0,2 to 0.8 g/m², dry weight, and allows a higher quality total layer from a lower amount of liquid gas barrier coating material composition.

Two part-layers of starch may thus be applied at an amount of from 0,2 to 1 g/m² each, but since the starch gas barrier coating can provide a very good smoothness coating by only a single coating, the metal coating may obtain sufficiently good quality by only one such gas barrier coating. Consequently, thanks to the smoothness and high quality of the metal coating applied onto the starch gas barrier coating, it seems to be also sufficient to apply only one single gas barrier coating as a top coating and still obtain very good gas barrier properties altogether, and good high-frequency induction heat sealing capability.

Almost all polymer materials suitable for dispersion coating of water-dispersible or water-soluble compositions to provide oxygen barrier properties have the disadvantage that their oxygen barrier deteriorates with increasing humidity in and surrounding the dried material layer. Thus, a coating or layer capable of providing barrier properties towards migrating water vapour is needed to keep the oxygen barrier layer(s) dry. Most barrier deposition coatings, applied by vapour deposition methods, provide good water vapour barrier properties. Depending on deposition method, quality and thickness, they also provide more or less of oxygen barrier properties. Metallization coatings provide mainly water vapour barrier, but may also provide quite some oxygen barrier, provided they are of a good coating quality and sufficient thickness.

Such thin vapour deposited metallization coating layers are nanometre-thick, i.e. they have a thickness counted in nanometres. Normally, standard aluminium metal vapour metallization coatings for general purpose decoration or barrier have a thickness below 70 nm, such as below 50 nm, and provide metallic, shiny coatings with an optical density of about 1.5-2.0.

Metallization coatings may be applied by different physical vapour deposition (PVD) techniques based on evaporation of metal, such as resistive evaporation, electron-beam evaporation, induction evaporation, pulsed laser deposition (PLD) and the slower sputtering techniques, which cause evaporation by bombardment with high-energy particles.

Generally, below 5 nm the barrier properties and quality of a conventional, standard aluminium metallization coating would be too low, i.e. a standard metallization coating would have too low barrier properties to provide sufficient gas barrier together with a gas barrier dispersion coating, and would have a too high sheet resistance for the purpose of induction heating, and above 200 nm, such as at 100 nm and above, such as above 80 nm, depending on the quality of the standard aluminium metal vapour deposition coating, the barrier coating may be less flexible and, thus, more prone to cracking when applied onto a flexible substrate.

An oxygen-enriched barrier aluminium metallization coating as applied in the examples according to the present invention preferably has a total thickness from above 100 nm to 150 nm, such as from 101 nm to 150 nm, such as from 101 nm to 145 nm, such as from 105 nm to 145 nm, such as from 105 nm to 140 nm, such as from 105 to 130 nm, as measured by transmission electron microscopy, TEM or by X-ray fluorescence calibrated with TEM known thickness samples, following sample preparation by ultramicrotomy as described herein.

The aluminium content of such a thin metallization coating corresponds to less than 2 percent of the aluminium metal material present in an aluminium foil of conventional thickness for packaging, such as about 6 µm.

The oxygen-enriched barrier aluminium metallization coating suitably exhibits a sheet resistance from 0.3 to 0.7 Ω/□, such as from 0.3 to 0.6 Ω/□, such as from 0.4 to 0.6 Ω/□ (Ohms per square), as measured by an instrument for contactless eddy current measurement.

The barrier-coated paper substrate with the oxygen-enriched barrier aluminium metallization coating has a metallic, opaque appearance similar to that of a standard aluminium metallization coating, i.e. may have an optical density above 2, preferably above 3, such as 4 or above, such as 4.5 or above.

It is to be noted that the optical density of a coated paper substrate may be influenced also by the properties of the paper substrate, not being a transparent layer and contributing to hindering light from being transmitted through the layers of the coated paper substrate. Generally, at an optical density (OD) lower than 1.8, the barrier properties of a metallised substrate may be too low and at an OD lower than 2.0, the sheet resistance may be too high for use in high frequency induction heat sealing. At an OD above 5, such as above 6, however, the deposited metal layer may become unnecessarily expensive and more sensitive to mechanical stress and less flexible, thus forming cracks or defects which may in turn impair oxygen barrier properties as well as induction heat sealing properties. These limits are not the same for different paper substrates, however, and can vary greatly. For natural reasons, it is not possible to remove the metallization layer from the paper substrate and measure the OD independently of the paper.

While vapour deposited metallization coatings require significantly less metal material than a foil of metal, they only provide a lower level of oxygen barrier properties and need to be combined with a further gas barrier material to provide a final laminated material having sufficient barrier properties. On the other hand, they may efficiently interact with and complement and protect a gas barrier layer like PVOH, which does not provide inherent water vapour barrier properties and whose gas barrier properties are very sensitive to moisture.

Normally, an aluminium metallization coating layer inherently includes also a thin surface portion comprising aluminium oxide, which is inherently formed towards and after the end of the metallisation coating process by reaction with oxygen when exposed to air.

A vapour deposited "pure," standard aluminium metallization coating onto PVOH seems to form such a thin boundary layer of practically pure aluminium oxide having the average formula Al₂O₃, also at the interface towards the PVOH substrate surface after a longer, sufficient time has passed. After several months of storage, up to half a year, the metallization coating exhibits a thin aluminium oxide layer also at the bottom, substrate side of the coating. After such time, there will be no further change in thickness of the Al₂O₃ "bottom", boundary, sub-portion of the metallization coating. It is believed that this may be due to having reached a "steady-state" equilibrium or a reached maximum level, similar to the "passivation of aluminium", i.e. similar to the formation of aluminium oxide, Al₂O₃, on the top surface of the aluminium metallization coating, such that the standard metallization deposition coating has reached its final configuration of aluminium oxide versus pure metal aluminium content in its depth or z-directional, i.e. thickness, extension of the metallization coating.

Accordingly, a standard aluminium metallization coating provides a higher sheet resistance when aged for some months, than what can be measured immediately after production and deposition of the coating, because some of the pure metal coating is gradually transformed into aluminium oxide, Al₂O₃. The change seems to happen more quickly in a climate of higher temperature and/or higher moisture, such as in a filled packaging container.

Regarding the oxygen-enriched aluminium metallization deposition coating as according to the present invention, this equilibrium content of aluminium oxide at the interface to the surface of the substrate, i.e. at the "bottom" of the coating, is reached during and very soon after, almost immediately after deposition coating of the aluminium metallization coating, i.e. within hours only.

For high-frequency induction heat sealing, it is important to ensure that the metallization coating has a required low sheet resistance. The sheet resistance of the metallization coating should be as low as possible. A feasible level has so far been found at about 0.4 up to 0.7 Ω/□, but a lower value of sheet resistance than 0.5, such as 0.4, such as 0.3 or even lower, may be desirable for better functioning in induction heat sealing of the material. Thus, to obtain a low enough sheet resistance from a standard metallization coating, it seems necessary to apply more pure metal than measured to be sufficient at the time of manufacturing of a conventional, standard metallization coating.

By instead applying an oxygen-enriched aluminium metallization deposition coating as according to the present invention, it appears there will be no further such change to the coating, i.e. the first phase aluminium oxide sub-portion of the layer will be formed at the time of coating and will increase no further in thickness or amount with time. The barrier-coated paper substrate achieves the desired sheet resistance during manufacturing and will consistently retain this resistance from that point onward (up to a 0.03 Ω/□ precision of measurements). It is perceived that the thickness of the first and third sub-portions of the layer, with aluminium oxide at the bottom and top parts of the thus oxygen-enriched aluminium metallization coating may be approximately the same, however, as obtained eventually after longer time of storage, in a standard metallization coating.

Yet, the two different types of coatings, although they may be designed and produced to finally have the same level of sheet resistance, seem to have very different properties. There is a clear difference in the thickness of the total deposition coating, as measured by TEM after sample preparation by ultra microtomy, in an oxygen-enriched aluminium metallization coating, having the required sheet resistance. The oxygen-enriched aluminium barrier metallization coating is about 30 % thicker than a standard metallization coating. However, the initial or "bottom" phase boundary layer at the substrate interface (the first sub-portion of the coating layer) adds very little to the overall thickness, contributing only about 3 to 4.5 nm in both types of metallization coatings This also indicates that the second sub-portion of the layer with a higher aluminium metal content contains a higher proportion of oxygen compared to the standard metallization coating, presumably also in the form of aluminium oxide, which has further been seen by comparable TOF-SIMS analysis of the two corresponding coatings.

Comparative analyses of oxygen-enriched and aged standard aluminum metallization coatings seem to indicate that both contain the same type of oxygen (present as aluminum oxide with the average formula Al₂O₃ throughout the coating, including the second aluminum metal sub-portion of the layer, but at varying concentrations. A low amount of aluminium hydroxide is also detectable in the coatings at the first and third sub-portions of the layer, i.e. at the interface and at the surface portions. Given the great improvement effects seen in developing the present invention, it seems there should be further differences between the two principal metallization coatings, but it has been difficult to identify clear differences.

One clear difference seen by Dynamic Time of Flight Secondary ion Mass Spectroscopy, ToF-SiMS analysis of the coatings, as depicted by an intensity-versus-time diagram by surface analysis, is that the oxygen-enriched aluminium metallization coating in the first sub-portion at the interface towards the substrate surface contains no methyl aluminium, i.e. CH3Al+, or virtually none. This is different from a standard metal aluminium metallization. Accordingly, the first aluminium oxide sub-portion of the oxygen-enriched barrier aluminium metallization coating, which is at the interface of the metallization coating towards the surface of the gas barrier coating, contains no, substantially none, or at least significantly fewer, methyl-aluminium ions, CH3Al+, in comparison to a corresponding sub-portion at the same interface towards the gas barrier coating of a standard, aluminium metal metallization deposition coating. Methyl aluminium ions seem to be fully oxidized at the interface towards the base-coated substrate in the oxygen-enriched barrier aluminium metallization coating, while some methyl aluminium ions remain in a standard metallization coating, even if aged for more than several months, such as for a year. In an aging standard aluminium metallization coating, on the other hand there is gradually also formed aluminium oxide in the sub-portion of the coating at the interface towards the substrate, but such gradual (ageing) formation of aluminium oxide, even if completed or at equilibrium, is different in that there clearly are remaining methyl aluminium ions in the first sub-portion at the interface towards the gas barrier coating.

Further differences seem to relate to concentration levels of substances and ions in the coatings, rather than to the more easily detectable absence or presence thereof.

There has been seen a further clear difference in that the oxygen-enriched barrier aluminium metallization coating may give rise to a yellow colour or yellowish appearance of the metallization coating, especially after melt extrusion coating with a transparent polymer coating. Such a yellow colour or yellow strips or yellowish appearance is never seen with a standard, not oxygen-enriched aluminium metallization, however, and is believed to appear due to moisture in the paper substrate somehow interacting with the oxygen-enriched aluminium barrier metallization.

It is believed that these yellow features may be caused by interaction during the PVD deposition coating process between the oxygen and the hydroxyl content of the PVOH molecules of the substrate surface, and that it may provide the same or a similar effect with other substrate surfaces comprising hydroxyl groups, such as from starch or suitable cellulose derivatives.

Moreover, it has been observed that the oxygen-enriched barrier aluminium metallization coating has larger grain size than a corresponding standard metallization coating (as otherwise manufactured under the same conditions), as analysed by Atomic Force Microscopy, AFM, according to ASTM E2859-11 (2023). While the former coating may have an average grain size of about 45 nm, the latter may have an average grain size in the coating of about 35 nm, for example. The aluminium oxide layer formed in the first sub-portion, at the interface to the substrate in the oxygen-enriched aluminium metallization coating, influences crystal growth of the aluminium layer formed in the second sub-portion, thus resulting in larger grains and fewer boundary layers, seemingly having a positive impact on the coating properties. We have seen consistently that the oxygen-enriched aluminium metallization coating has larger grains and a rougher surface than the standard metallization coating.

The great effects obtained in the barrier-coated paper substrate of the invention are that it exhibits a remarkably improved durability in high frequency induction heat sealing and that it seems particularly resistant to long-term moisture conditions when laminated into polymer-layered structures and used for packaging of oxygen-sensitive food, in particular liquid or semi-liquid food products.

Generally, there is no need for further layers for moisture protection or water vapour barrier properties and no further materials are needed to introduce better electrical and mechanical properties, than merely PVOH, modified PVOH or e.g. starch and the oxygen-enriched aluminium barrier metallization. More specifically, there is no need for additional pre-coatings or material layers in the barrier-coating structure to act as a water barrier for the moisture sensitive parts thereof, such as of a PVOH gas barrier coating. Liquid-tight layers, such as those of thermoplastic polymers such as polyolefins or modified polyolefins, such as ethylene copolymers with (meth)acrylic acid, EAA or EMAA, should be avoided within the barrier coating structure to allow equalization of moisture between the gas barrier coating and the paper substrate layer. Preferably, the only liquid barrier present in the structure is the oxygen-enriched barrier aluminium metallization coating. Otherwise, more moisture could be accumulated within the moisture sensitive gas barrier coating, which would deteriorate its oxygen barrier properties.

For the PVD coating process to work optimally, the moisture content in the paper or paper substrate should preferably be kept at from 4 to 8 %. If the substrate becomes too dry, it may curl its longitudinal edges toward each other and cause coating and handling problems in the method of the invention. If the moisture content becomes too high, on the other hand, the vapour deposition coating operation may not function properly to provide a high-quality coating.

The adhesion of any standard aluminium metal metallization coating, as well as of an oxygen-enriched barrier aluminium metallization coating, to the gas barrier coating is excellent, both in the case of a PVOH gas barrier coating and in the case of a starch gas barrier coating. In peel testing, to investigate the adhesive forces, there will thus be fibre tear in the paper substrate rather than between the PVOH and the metallization coating. The adhesion between an oxygen-enriched metallization coating and the inside polymer layer structure in a laminated material comprising the barrier-coated paper substrate is equally good and also provides fibre tear within the substrate.

A specific embodiment of the method for manufacturing a barrier-coated paper substrate of the second aspect, comprises the steps of
a) providing and forwarding a continuous web of the paper substrate as defined in the first aspect,
b) providing an aqueous gas barrier coating composition gas barrier coating comprising from 65 to 100 weight-% of a polymer material selected from the group consisting of polyvinyl alcohol, PVOH, modified polyvinyl alcohol, such as aqueous ethylene-modified polyvinyl alcohol, EVOH_{aq}, starch, starch derivatives, modified starch materials, xylan, xylan derivatives, nanofibrillar/ microfibrillar cellulose, NFC/ MFC, cellulose ethers, and blend compositions of any two or more thereof, and from 0 to 35 weight-% of inorganic particles, based on the total dry weight of the gas barrier coating,
c) applying the aqueous gas barrier coating composition onto the top side of the web of the paper substrate by means of dispersion coating, such as by a smooth roller coating method,
d) drying the applied aqueous gas barrier coating from step c), to provide the gas barrier coating,
e) optionally repeating steps c) and d),
f) further coating the gas-barrier coated and dried web substrate obtained from step e), with an oxygen-enriched barrier aluminium metallization coating by means of physical vapour deposition of aluminium metal vapour, comprising
f1) depositing a first sub-portion of aluminium oxide adjacent onto and in direct contact with the free, uncoated surface of the gas barrier coating while adding oxygen to the aluminium metal vapour,
f2) depositing a second sub-portion comprising mainly aluminium metal to a greater thickness than the first sub-portion of aluminium oxide, thus providing the oxygen-enriched barrier aluminium metallization coating with an aluminium metallization appearance and opacity,
the oxygen-enriched barrier aluminium metallization coating being deposited to a total thickness from 70 to 150 nm, as measured by transmission electron microscopy, TEM, following sample preparation by ultramicrotomy as described herein.

In a further preferred embodiment, the oxygen-enriched barrier aluminium metallization coating is deposited to a total thickness from 90 to 150 nm, as measured by transmission electron microscopy, TEM, following sample preparation by ultramicrotomy as described herein, to exhibit a sheet resistance from 0.3 to 0.7 Ω□, such as from 0.3 to 0.6 Ω□, such as from 0.4 to 0.6 Ω□ (Ohms*square), as measured by an instrument for contactless eddy current measurements.

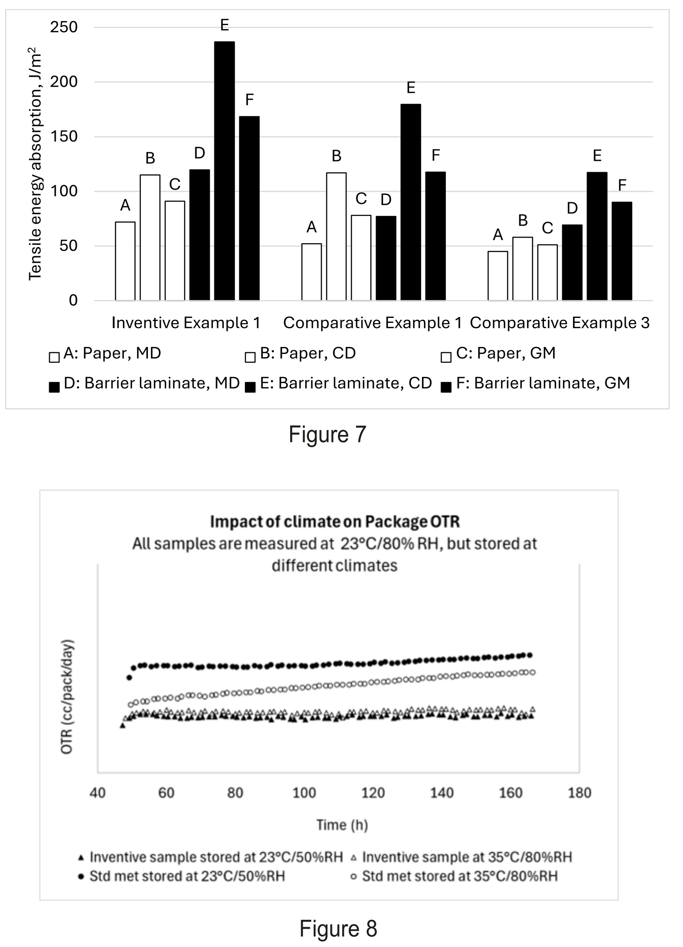

The diagram in Figure 8 shows the results of repeated OTR measurements of similar packaging containers, being made of similar laminated packaging materials, after long-term storage at different climate conditions. From these results, it has been concluded that an oxygen-enriched aluminium metallization barrier coating is significantly more resistant to long-term exposure to moisture, i.e. to the conditions for liquid carton packaging containers in use, than a conventional aluminium metallisation. Packages with such an aluminium metallization barrier are thus better suited to preserve their oxygen barrier properties, whatever the initial oxygen barrier level of the material may be. This property is important in aseptic liquid carton packaging.

The laminated packaging material of the fourth aspect thus comprises as layers of a layer sequence, as viewed from outside to inside of a packaging container formed from the laminated packaging material,
an outermost, transparent, and protective material layer,
a barrier-coated paper substrate described and defined above,
an inside polymer layer structure applied on the inner side of the barrier-coated paper substrate, comprising at least
an innermost, heat sealable, liquid tight layer, which comprises a thermoplastic material and is intended to be in direct contact with a filled food product in a packaging container manufactured from the laminated packaging material. Such a laminated packaging material may be suitable for pouch packages for oxygen-sensitive liquid food, or for wrapping material of oxygen-sensitive food in general.

The laminated packaging material may further comprise a bulk layer of paper, paperboard or other cellulose-based material laminated between the outermost, transparent and protective material layer and the barrier-coated paper substrate. This is the typical laminate structure for liquid carton flowable food and beverage packaging and the most preferred laminated packaging material to make use of the barrier-coated paper substrate of the invention.

The bulk layer may contribute to the bending stiffness of the laminated packaging material, and to dimensional stability of fold-formed packaging containers made thereof, to withstand strong, acting forces created by movement in the packed content of for example liquid and viscous oxygen-sensitive products, during distribution, handling and storage. In metallized paper barrier laminates, the aluminium metallization or vacuum deposited barrier coating, such as the oxygen-enriched barrier aluminium metallization coating, is directed towards the inside of the packaging container, i.e. such that the paper substrate is directed towards the bulk layer while the barrier coatings are directed towards the innermost layer.

A paper or paperboard bulk layer for use in the invention usually has a thickness of from about 70 µm up to about 600 µm, and a surface weight of approximately from 65 to 500 g/m², such as from 100-400 g/m², preferably from about 200 to 300 g/m², and may be a conventional paper or paperboard of suitable packaging quality. Clay-coated duplex paperboard is preferred. For larger packages a paperboard of 400 to 500 µm and higher bending stiffness is preferred, such as 260 mN. For portion packs of 150 to 250 mL size, a bending stiffness of 80 mN is preferred and accordingly a lower surface weight and thickness.

In the case the resulting laminated material is to be used as a pouch package, thinner paper layers may be used for the barrier-coated paper substrate and as well as for the bulk layer, which then together create the bulk strength or stability of the paper laminate. In such cases, the additional "bulk" paper may have a grammage from 40 to 64 g/m², such as from 40 to 55 g/m², and the barrier-coated paper substrate may have a grammage weight from 40 to 55 g/m².

For low-cost aseptic, long-term packaging of liquid food, a thinner packaging laminate suitable for pouch packages may thus be used, having a thinner paper core layer. The packaging containers made from such packaging laminates are not fold-formed but are more similar to pillow-shaped flexible pouches. A suitable paper for pouch-packages usually has a surface weight of from about 50 to about 140 g/m², preferably from about 70 to about 120 g/m², more preferably from 70 to about 110 g/m². As the barrier-coated paper or paper substrate of the invention in itself may contribute with some stability to the laminated material, the paper layer corresponding to a "bulk" layer may be even thinner and interact with the barrier-coated paper substrate in a sandwich interaction to still produce a laminated packaging material having the desired mechanical properties.

The barrier-coated paper substrate may generally be bonded to the bulk layer by an intermediate bonding layer of a polymer. The polymer may be a thermoplastic polymer. The thermoplastic polymer may be used as a bonding layer by melt-extrusion lamination to join a web comprising the barrier-coated paper substrate to a web comprising the bulk layer, in a lamination roller nip, in which the molten, interjacent thermoplastic polymer is cooled and solidified to form the intermediate bonding layer. This is a preferred embodiment as it fits well into already installed and producing, extrusion-lamination converting lines for the purpose of laminating liquid carton packaging materials. It has recently been concluded that only a low surface weight of a melt extrusion laminated thermoplastic polymer, such as LDPE, is needed for obtaining excellent adhesion between the bulk layer and the paper substrate. This is advantageous both to keep the total proportion of polymers down and for recyclability, as such a laminated packaging material has proven, contrary to expectations, to be sufficiently quick to repulp into the used beverage carton, UBC, recycling stream. A suitable surface weight for such melt extrusion lamination of a thermoplastic bonding layer is from 6 to 10 g/m², such as from 7 to 9 g/m².

An alternatively feasible lamination method suitable for recycling, is aqueous adhesive wet lamination of the two layers to each other by an aqueous adhesive and pressing the webs to be joined together in a lamination roller nip. Such a lamination method may reduce the total polymer proportion in the laminated material further and allows fast repulping but needs new installations and investments into extrusion lamination facilities. The gain in comparison to melt extrusion lamination is only a very few grams per square meter, however. Aqueous wet lamination still requires from 0.5 to 6 g/m², such as from 1 to 6 g/m², such as from 1 to 5 g/m², such as from 3 to 5 g/m² of an aqueous adhesive polymer, per dry weight, for adequate adhesion. The barrier-coated paper substrate may thus be laminated to the bulk layer by an intermediate bonding layer from a composition comprising a water-dispersible binder, such as selected from the group consisting of acrylic polymers and copolymers, polymers and copolymers of vinyl acetate and/or vinyl alcohol, biobased binders, such as starch-based binders, binders based on cellulose or cellulose derivatives and binders based on other polysaccharide derivatives.

The barrier-coated paper substrate may thus be laminated to the bulk layer by wet application of a dispersion of an aqueous adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There is thus no need for a forced drying step. The barrier-coated paper substrate may be laminated to the bulk layer by from 0.5 to 6 g/m², such as from 1 to 6 g/m², such as from 1 to 5 g/m², such as from 3 to 5 g/m², dry weight, of an intermediate bonding composition comprising a binder selected from the group consisting of acrylic polymers and copolymers, starch, starch derivatives, cellulose derivatives, polymers and copolymers of vinyl acetate, polymers and copolymers of vinyl alcohol, copolymers of styrene-acrylic latex or styrene-butadiene latex or adhesive bio-latexes. For best possible environmental and sustainability profile, adhesive binders originating from plants or non-fossil sources are preferred.

Such a low amount of an intermediate bonding composition is only possible to apply by aqueous dispersion or solution coating of a polymer binder and is not possible to apply by extrusion coating or extrusion lamination of a single-layer polymer melt due to the nature of the molten-layer extrusion process. Since the surfaces of the layers to be laminated together are both made of cellulose, aqueous wet lamination is performed by the absorption of the aqueous medium into the respective cellulose layers, and thus a thin and dry bonding layer at the interface between the two layers may be formed.

Suitable materials for the outermost and innermost layers of the heat sealable laminated packaging material may be thermoplastic polymers, such as polyolefins such as polyethylene and polypropylene homo- or co-polymers, such as polyethylenes and more preferably polyethylenes selected from the group consisting of low density polyethylene (LDPE), linear LDPE (LLDPE), single site catalyst, so-called "metallocene" linear low density polyethylenes (m-LLDPE) and blends or copolymers thereof. Such thermoplastic polymers also have the advantage of being readily weldable, i.e. heat sealable, to the same or similar polymers and to other materials with thermoplastic behaviour.

The outermost, transparent, and protective material layer may be a liquid tight, heat sealable layer of a polyolefin-based polymer, such as polyethylene-based polymer, such as low density polyethylene, LDPE. Such an outermost, liquid tight and heat sealable layer usually is applied at a surface weight from 7 to 15 g/m², such as from 7 to 12 g/m², such as from 7 to 10 g/m². Such a polyolefin-based polymer is applied by melt-extrusion coating.

In another embodiment, the outermost layer may be merely protective towards liquid and dirt, such that any sealing of the outside surface to another surface or item, such as an opening device or the like, will be carried out by an additional glue or hot melt. Thus, if a significantly thinner outermost layer is desired, not necessarily providing complete tightness to liquids but still some moisture and dirt resistance, an aqueous dispersion of a polyolefin-based polymer, such as a water dispersible copolymer of ethylene acrylic acid with a rather high content of acrylic acid comonomers, such as more than 20 mol% of acrylic acid comonomer may be used. The surface weight may then be reduced to from 4 to 8 g/m², such as from 4 to 7 g/m². Such low amounts of polymer in the outermost layer may not be recoverable to a polymer recycling stream from UBC recycling, however, but the polymer would rather be entirely re-dispersed into the fibre recycling stream or dissolved in the repulping liquid, or fragmented and form part of the actual fibre stream. Thus, it may be preferred to recover the polymer applied on the outside as a solid polymer fraction instead. Consequently a layer of melt extrusion coated LDPE at from 7 to 10 g/m² may be equally advantageous.

The innermost layer of the liquid tight, heat sealable laminated packaging material may also be a thermoplastic polymer, such as a polyolefin-based material, such as a polyethylene-based polymer, such as from the group consisting of low density polyethylene, LDPE, linear low density polyethylene, LLDPE, and blends thereof. Preferably, the innermost layer is a blend of low density polyethylene, LDPE, and metallocene-catalysed (using a single-site or constrained-geometry catalyst), linear low density polyethylene, m-LLDPE. This is the type of polymer most used today for the innermost layer, for best balanced liquid tightness and heat-sealability properties. By choosing the composition of this layer carefully, the amount of polymer in this layer may be optimised to be as low as possible while still producing strong and reliable, filled packages.

According to an embodiment, the outermost heat sealable and liquid-tight layer may be an LDPE, while the innermost heat sealable, liquid-tight layer may be a blend composition of m-LLDPE and LDPE for optimal lamination and heat sealing properties. The thermoplastic material of the innermost liquid tight, heat sealable layer may thus be a thermoplastic polymer, such as a polyolefin-based material, such as a polyethylene-based polymer, such as a blend of a linear low-density metallocene-polyethylene, m-LLDPE, and low-density polyethylene, LDPE. An optimal composition of such an innermost layer tight, heat sealable material layer may be a blend comprising from 50-90 weight-% of a linear low density polyethylene catalysed by a metallocene-type catalyst, m-LLDPE, and from 10 to 50 weight-% of a low density polyethylene, LDPE.

Preferably, the innermost liquid tight, heat sealable material layer has a density lower than 0.93 g/cm³, such as lower than 0.92 g/cm³, such as lower than 0.915 g/cm³.

Preferably, the innermost liquid tight, heat sealable material layer has a major melting point from 88 to 110 °C.

In a preferred embodiment, the thermoplastic material of the innermost liquid tight, heat sealable layer may be a pre-manufactured polyolefin film, such as a polyethylene film, such as an oriented polyethylene film comprising a major proportion of linear low density polyethylene, LLDPE, or linear low density metallocene-polyethylene, m-LLDPE, for improved robustness of the mechanical properties of the laminated packaging material. Most preferably, such an innermost pre-made film is a cast, biaxially oriented film comprising a major proportion of linear low density polyethylene, LLDPE, or linear low density metallocene-polyethylene, m-LLDPE. The innermost, pre-manufactured, polyethylene film is laminated to the inner side of the barrier-coated paper substrate by a melt extrusion laminated layer, such as comprising a first sub-layer of an adhesive polymer, such as EAA, to contact the oxygen-enriched barrier aluminium metallization coating, and a second major bonding sub-layer, such as comprising LDPE, contacting the innermost, pre-manufactured film.

In a different preferred embodiment, the inside polymer layer structure applied on the inner side of the barrier-coated paper substrate may comprise an interior layer comprising high-density polyethylene, HDPE, medium-density polyethylene, MDPE, or a linear low-density polyethylene, LLDPE, the LLDPE having a melt flow ratio, MFR, from 4 to 20 g/10 min (190 °C/ 2.16 kg) and a melting temperature above 115 °C, such as 120 °C. Such an interior layer may be referred to as a load-bearing layer, which improves the overall package integrity of the laminated packaging material. The innermost liquid tight, heat sealable layer is then suitably a blend of a linear low-density metallocene-polyethylene, m-LLDPE, and low-density polyethylene, LDPE, as described above.

Other suitable bonding or tie layers in the interior of the laminated material, such as for example between the bulk or core layer and the barrier-coated paper substrate, or between the innermost, liquid tight and heat sealable layer and the barrier-coated paper substrate, may alternatively be so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or maleic anhydride (MAH) grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA). General bonding layers such as polyolefin layers, and layers of adhesive polymers, i.e. so-called adhesive layers or tie layers, may be applied as co-extruded, adjacent layers for optimal interior polymer properties and bonding properties. For the sake of recycling of polymers and keeping the number of different polymers to a minimum in recycling, such polymers would be used on a need-basis only, to obtain better adhesion if needed only, and would preferably be avoided as far as possible.

The outer- and innermost, liquid-tight layers and the lamination layers in the interior of the laminate structure, do not normally and inherently add high barrier properties to migrating gas molecules or small molecules. Their purpose is to provide a direct barrier to water in liquid form from penetrating through to the cellulose-based bulk material and other paper layers. The liquid barrier layers also prevent water vapour from migrating to the cellulose to the extent that it gets wet but are not capable of keeping the moisture content of the laminated structure at zero or at the low level of "dry" paper (which is at about 7-8 % in an environment at ambient temperature, i.e. at 23 °C, and 50 % relative humidity, RH). The moisture content in the laminated carton material of a packaging container filled with liquid is usually rather high and migration through the material occurs, unless there is a further water vapour barrier included, such as an aluminium foil, a vapour deposited metallisation layer, other vapour deposition coating, inorganic material layer or other polymer barrier material layer.

In a preferred embodiment, an interior, interjacent layer comprising a high-density polyethylene, HDPE, medium-density polyethylene, MDPE, or a linear low-density polyethylene, LLDPE, the LLDPE having a melt flow ratio, MFR, from 4 to 20 g/10 min (190 °C/ 2.16 kg) and a melting temperature above 115 °C, is adjacent and in direct contact with the innermost liquid tight, heat sealable material layer. By such an inside polymer layer configuration, a more cost-efficient and well-functioning packaging laminate is provided. As few as possible melt extrusion polymer streams are needed, requiring as few extruders as possible, while yet combining all positive functionality and properties needed in an inside polymer multilayer structure, i.e. heat sealability, liquid-tightness, load-endurance (upon folding and straining) to provide good package integrity, good adhesion to the barrier layer portion, as well as good openability of the packaging laminate through a pre-cut, laminated straw-hole or a larger hole intended for an opening device.

Preferably, the inside polymer layer structure further comprises a tie layer comprising an adhesive polymer adjacent and in contact with the barrier-coated, inner side of the barrier layer or barrier multilayer structure, such as the barrier-coated paper substrate. This is advantageous in long-term packaging and storage of filled packages, to maintain adhesion between the inside polymer layer structure and the barrier layer surface of the barrier-coated paper substrate, in particular when the barrier layer surface is a metal surface, such as the oxygen-enriched, barrier aluminium metallization deposition coating.

In an embodiment, the laminated packaging material thus comprises at least one laminated opening hole in which a hole in the bulk layer is covered by the other layers of the laminated packaging material. The configuration of the inside polymer multilayer portion supports the membrane of the pre-cut, laminated hole better in heated operations, such as in lamination of the material and in heat sterilization in a filing machine, by its better thermomechanical resistance by including the above described interior layer of HDPE, MDPE or LLDPE.

The method of manufacturing the laminated packaging material comprises lamination of the bulk layer, barrier layer, outermost layer, and innermost layers, and may also comprise coating of the barrier layer substrate layer with one or more of the barrier coatings. The layers of the laminated packaging material may be joined in any order.

In an embodiment, the bulk layer and barrier-coated paper substrate are laminated, followed by application of the innermost layer and then the outermost layer (or less preferably followed by application of the outermost layer and then the innermost layer). This order is referred to as "LID" wherein L= lamination of paperboard to barrier layer by intermediate bonding layer; I = application of innermost layer to barrier layer; D (décor) = application of outermost layer onto paperboard. The less preferred alternative is referred to as "LDI".

Alternatively, the bulk layer may be initially joined to the outermost layer. This order is referred to as "DLI". This order is particularly suitable when the outermost layer is a dispersion coated thin layer. In this case, dispersion coating may follow printing of the bulk layer, as printing and dispersion coating are similar coating processes. Extrusion coating of the outermost layer is also possible. DLI is further suitable to protect the printed décor on the paperboard, such that it will not be scratched or scuffed or in the following lamination stations.

A heat sealable laminated packaging material as described above may provide good integrity when transformed into filled packaging containers, by good adhesion between the adjacent layers within the laminated construction and by providing good quality of the barrier coatings as well as by the resilience of the inside polymer multilayer portion. Especially, for the packaging of liquids, it is important that the inter-layer adhesion within the laminated packaging material, as well as the oxygen gas barrier properties, is maintained also under wet packaging conditions.

A packaging container formed from the described laminated packaging material may be partly sealed, filled with liquid or semi-liquid food and subsequently sealed, by sealing of the packaging material to itself, optionally in combination with a plastic opening or top part of the package.

Robust and reliable heat sealed packages for liquid food packaging for long term shelf-life and storage may be obtained from laminated packaging materials comprising a barrier-coated paper substrate as defined by the claims, thanks to good interaction between the barrier-coated paper substrate and the inside polymer layer structure, such that the oxygen barrier properties are preserved and the filled product is well protected during fold-forming and sealing of the packaging material as well as during subsequent distribution and storage.

In such a laminate, the aluminium metallization coating is directed towards the inside of the packaging container, i.e. such that the paper substrate is directed towards the bulk layer while the barrier coatings are directed towards the innermost layer.

### Examples and description of preferred embodiments

In the following, preferred embodiments of the invention will be described with reference to the drawings, of which:
Fig. 1 schematically shows in cross-section an example of a gas- and water-vapour barrier-coated paper substrate as used in the laminated packaging material of the invention,
Fig. 2 shows a schematic, cross-sectional view of an example of a laminated packaging material of the invention, comprising the barrier-coated paper substrate of Fig. 1,
Fig. 3a shows schematically a method, for dispersion coating an aqueous barrier coating composition onto a paper substrate,
Fig. 3b shows schematically a method for extrusion laminating a barrier-coated paper substrate to a paperboard bulk layer,
Fig. 3c shows schematically a method, for melt (co-) extrusion coating layer(s) of a thermoplastic heat sealable and liquid-tight polymer onto a web substrate, to e.g. form innermost and outermost layers of a packaging laminate of the invention,
Fig. 4 is showing a diagrammatic view of a plant for physical vapour deposition (PVD) of a metallization coating onto a base-coated web of a paper substrate,
Fig. 5a, 5b, 5c and 5d are showing typical examples of packaging containers produced from the laminated packaging material according to the invention,
Fig. 6 is showing the principle of how such packaging containers may be manufactured from the packaging laminate in a continuous, roll-fed, form, fill and seal process,
Fig. 7 shows the tensile energy absorption, as tested herein, of the paper substrates, and to laminated packaging materials comprising them, of an inventive example and comparative examples, and
Fig. 8 is a diagram showing the results of repeated OTR measurements of similar packaging containers, after long-term storage at different climate conditions.

Further, relating to the attached figures:

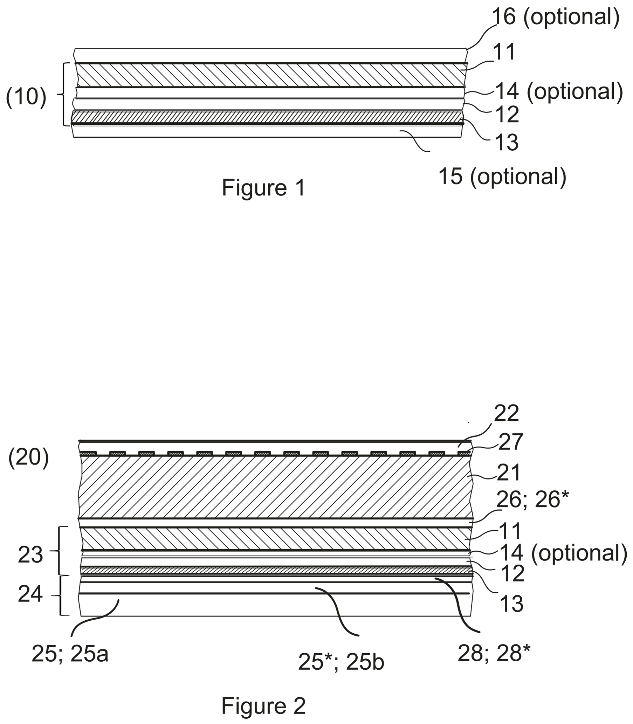

In Fig. 1, there is shown, in cross-section, an embodiment of the barrier-coated paper substrate 10 as used in the laminated material of the invention. The paper substrate 11 is a paper made of a cellulose fibre composition with chemical fibres, having a density above 900 kg/m³, a grammage weight of about 47 g/m², a shives content fewer than 5000 per gram of the fibre composition, as determined according to the method FA 10.402 from Pulpeye after sample preparation according to ISO 5263-1:2004, such as the paper of Inventive Example 1 as described in Table 1, having a top side roughness Bendtsen value of lower than 80 ml/min and a Cobb 60 value of less than 30 g/m². The paper substrate 11 was provided with a gas barrier coating 12 of PVOH, Poval^{®} 15-99 from Kuraray, in the form of an aqueous solution coating composition which is heat dried to evaporate the water from the wet applied coating. The gas barrier coating was applied as two consecutive wet coatings with intermediate drying, each at about 0.8 g/m². The total dry weight of the resulting PVOH gas barrier coating is thus about 1.6 g/m². The paper substrate 11 may have an optional pre-coating 14 applied, beneath the gas barrier coating, to provide a smooth and closed surface to enable a high quality gas barrier coating.

Further, the thus base-coated paper substrate is vapour deposition coated with an aluminium metallisation coating, in this case an oxygen-enriched barrier aluminium metallisation coating 13, i.e. a barrier aluminium-metal metallisation layer applied onto the dried surface of the gas barrier coating 12, by injection of extra oxygen in the early deposition phase into the PVD vapour deposition zone. The oxygen-enriched aluminium metallization coating was applied until a sheet resistance of 0.5 ohms/square was obtained. The thickness of the coating was determined to be about 100-110 nm.

The barrier-coated paper substrate 10 may further be provided with optional protective and/or heat sealable coatings applied on each side 15, 16. The further layer coating 15 may be a thermoplastic polymer, such as a polyolefin, such as an LPDE or an ethylene-based adhesive polymer, such as EAA or a maleic anhydride graft copolymer with polyethylene. Such a further layer is needed to cover any defects, such as pinholes, in the barrier coatings. If the further protective coating 15 is made of a thermoplastic polymer or material, the laminated structure may also be heat-sealable to itself, as a barrier wrapping or a flexible, paper-based packaging material. The heat-sealable layer 15 thus forms the heat sealable inside of the packaging material structure and the barrier coatings are directed towards the heat sealable inside layer 15. Such a packaging material may thus be heat sealable by induction heat sealing. The further polymer layer or further coating itself has no or very low inherent oxygen barrier properties and thus does not contribute further to the oxygen transmission value measured.

A further layer or coating 16 of a protective polymer, which may be of the same or a different kind as the coating or layer 15, may optionally be applied also onto the other side of the paper substrate, to form the outside of the packaging material. Consequently, a simple laminated material may be obtained by merely adding outermost, protective polymer layers 15 and 16 to the barrier-coated paper substrate 10, comprising the layers 11, 12, 13 and optionally 14.

In Fig. 2, a laminated packaging material 20 for packaging of oxygen sensitive products, such as for liquid food and beverage is shown, which comprises the barrier-coated paper substrate 10; 23, as described in Fig. 1. The laminated material further comprises a bulk layer 21 of paperboard, having a geometrical average bending force of 80 mN and a surface weight of about 200 g/m², and further comprising an outermost, transparent and protective, preferably liquid tight and heat sealable polymer layer 22 applied on the outside of the bulk layer 21, which side is to be directed towards the outside of a packaging container produced from the packaging laminate. The layer 22 is transparent to show the printed décor pattern 27, which is printed onto the bulk layer of paper or paperboard, to the outside. Thereby, the printed pattern may inform about the contents of the package, the packaging brand and other information targeting consumers in retail facilities and food shops. The polymer of the outermost layer 22 may be a polyolefin, such as a conventional low density polyethylene (LDPE) of a heat sealable quality, but could also include further similar polymers, including LLDPEs. It is applied at an amount of about 12 g/m².

On the inner side of the barrier-coated paper substrate 23, there is applied an inside polymer layer structure 24, comprising at least an innermost liquid tight and heat sealable layer 25, thus arranged on the opposite side of the bulk layer 21, which is to be directed towards the inside of a packaging container produced from the packaging laminate, i.e. the innermost layer 25 will be in direct contact with the packaged product. The thus innermost heat sealable layer 25, which is to form strong transversal heat seals of a liquid packaging container made from the laminated packaging material, may comprise one or more of polyethylenes selected from the groups consisting of LDPE, linear low density polyethylene (LLDPE), and LLDPE produced by polymerising an ethylene monomer with a C4-C8, such as a C6-C8, alphaolefin alkylene monomer in the presence of a metallocene catalyst, i.e. a so called metallocene - LLDPE (m-LLDPE). In a preferred embodiment, the innermost layer 25 is a melt (co-)extrusion coated layer of a blend comprising from 50 to 100 weight-%, such as from 60 to 80 weight-% of m-LLDPE and from 0 to 50 weight-%, such as from 20 to 40 weight-% LDPE. The innermost liquid tight and heat sealable layer 25 may be applied by (co-)extrusion coating at an amount of from 15 to 35 g/m², depending on the total configuration of the inside polymer layer structure. The innermost layer 25 may be co-extrusion coated together with a tie layer 28 of an adhesive polyolefin-based polymer, such as an ethylene acrylic acid, EAA. The inside layers 25 and 28 may further be co-extrusion coated together with an optional, interjacent layer 25* of LDPE.

In an alternative embodiment, an innermost heat sealable layer 25a, of a same or similar composition as the above innermost layer 25, is melt co-extrusion coated separately from, or together with, a first interior, tie layer, 28a of a few g/m², such as from 4 to 7 g/m², e.g. of ethylene acrylic acid copolymer (EAA) layer or a different adhesive polymer having polar functional groups, which is well adhered to the surface of the oxygen-enriched aluminium barrier metallization 13 of the barrier-coated paper substrate 23; 10, and together with a further interior layer 25b comprising a polymer selected from a high-density polyethylene, HDPE, medium-density polyethylene, an MDPE, or a linear low-density polyethylene, LLDPE, the LLDPE having a melt flow ratio, MFR, from 4 to 20 g/10 min (190 °C/ 2.16 kg) and a melting temperature above 115 °C. Such an inside polymer layer structure thus adheres the innermost heat sealable layer 25a to the barrier coated paper substrate 23, by applying the layers together, or separately, by melt coextrusion coating. The interior layer preferably may comprise a blend layer of 50:50 weight ratio of the HDPE and LDPE, thus improving and optimizing the integrity of a fold-formed packaging container, from a laminate comprising the barrier-coated paper substrate and the described inside polymer layer structure.

The bulk layer 21 is laminated to the uncoated side of the barrier-coated paper substrate 23; i.e. 10 from Fig. 1, by an intermediate bonding layer 26 of a thermoplastic polymer, such as a low density polyethylene (LDPE). The barrier coatings 12, 13 and optionally 14, are thus directed towards the inside in the laminated material, as seen in a packaging container made from the laminated material. The intermediate bonding layer 26 is formed by means of melt extruding a thin polymer melt curtain between the two paper webs and thus laminating the bulk layer and the barrier-coated paper substrate to each other, as all three layers pass through a cooled roller nip with a press roller. The thickness of the intermediate bonding layer 26 may be from 7 to 18 µm, such as from 7 to 15 µm, such as from 7 to 12 µm, such as from 7-10 µm. Surprisingly, excellent adhesion may be reached by a lower amount of extrusion lamination polymer, such as from 7 to 10 µm, while an improved recycling process is enabled, by a significantly shortened repulping time of the laminated packaging material. This is the topic of a co-pending patent application from Applicant.

In an alternative embodiment, applicable to any described embodiment regarding the inside polymer layer structure 24, the bulk layer 21 may be laminated to the barrier-coated paper substrate 23, by means of wet lamination with an intermediate bonding layer 26* of a thin layer of adhesive polymer, obtained by applying an aqueous dispersion of a polyvinyl acetate adhesive onto one of the surfaces to be adhered to each other and subsequently pressing together in a roller nip. Such a lamination step is performed in an efficient cold or ambient lamination step at industrial speed without any energy-consuming drying operation needed to accelerate the evaporation of the water. The dry amount applied of the intermediate bonding layer 26* is from 3 to 5 g/m² only, which explains that there is no need for drying and evaporation of the water content, as it is equalized and absorbed into the cellulose matrix of the two paper layers, i.e. the bulk layer paperboard and the backside of the barrier-coated thin paper.

The amount of thermoplastic polymer or bonding polymer can thus be significantly reduced in this lamination layer, in comparison to the conventional melt extrusion laminated bonding layer 26 of polyethylene, involving traditionally from 12 to 18 µm of thermoplastic bonding polymer (LDPE). According to each of the embodiments of melt extrusion lamination and wet lamination, the amount of polymer in the intermediate bonding layer may be significantly reduced, thus reducing impact on climate and environment, as well as reducing the cost of raw materials.

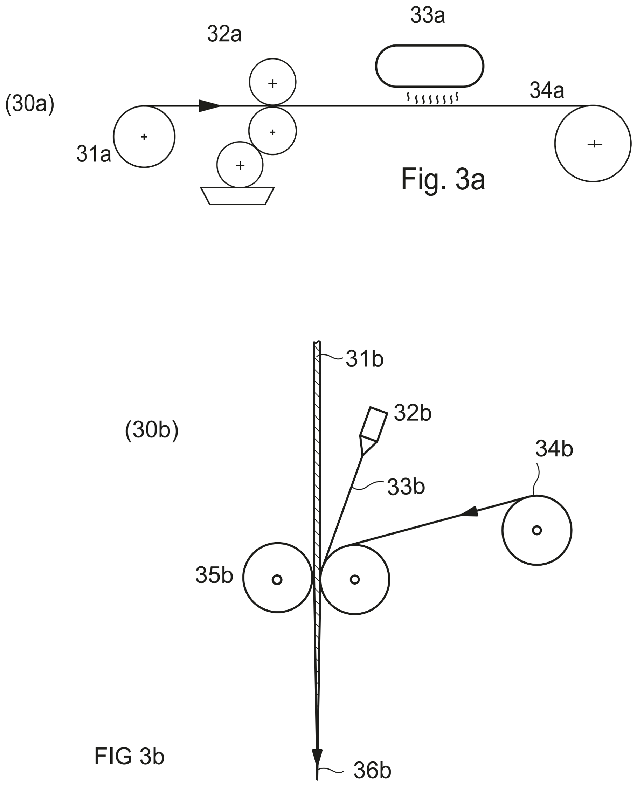

In Fig. 3a, a principal process of aqueous dispersion coating 30a is shown, which may be used for applying the aqueous composition of the gas barrier coating layer 12. The principal process may also be used for applying any optional further aqueous pre-coating composition, or any optional aqueous top coating composition. The paper substrate web 31a (e.g. the paper substrate 11 from Figure 1) is forwarded to the dispersion coating station 32a, where the aqueous composition is applied by means of rollers onto the top side surface of the substrate. If the surfaces of the two sides of the substrate are different, usually there is one side more suitable for receiving a coating or a printed décor pattern, which is the surface to be coated for this invention (usually this side is called the top side or the print side). Since the composition has an aqueous content of from 80 to 99 weight-%, there will be a lot of water on the wet coated substrate that needs to be dried by heat, and evaporated, to form a continuous coating, which is homogenous and has an even quality with respect to barrier properties and surface properties, i.e. evenness and low occurrence of defects. The drying step 33a is carried out by a hot air dryer, which also allows the moisture to evaporate and be removed from the surface of the substrate. The temperature of the substrate surface as it travels through the dryer, is consistently kept below 95 °C, such as at from 60 to 95 °C, such as at from 70 to 90 °C, such as below a temperature from 80 to 90 °C, such as below a temperature of about 85 °C.

The resulting gas-barrier-coated paper substrate web 34a is forwarded to cool off and is wound onto a reel for intermediate storage. At a following or later stage, the thus coated web may be forwarded to a further barrier coating step, i.e. a physical vapour deposition coating of a barrier aluminium metallization coating 13 onto the base-coated paper substrate 11-12: 34a.

Fig. 3b shows a first lamination process step in a principal process for extrusion lamination in the manufacturing of the laminated packaging material 20, as the bulk layer 31b; 21 is laminated to the barrier-coated substrate material web 34b (34a from fig. 3a); 23.

As explained in connection to Fig. 2, the bulk layer paperboard 21 may be laminated to the barrier-coated substrate material 23 by means of melt extrusion lamination as shown in this figure, or by means of wet, cold dispersion adhesive lamination, the latter method however not shown. Thus, in extrusion lamination a thin molten polymer curtain 33b of e.g. LDPE is fed from a heated extruder and extrusion die 32b into a nip of lamination rollers 35b, as the two webs 31a and 34b are also forwarded to the same lamination nip and joined to each other by the intermediate, extruded bonding layer 33b of LDPE. The three layers are thus pressed together and joined at the nip 35b, which is formed between a press roller and a chill roller, while cooling the laminated material to properly solidify the extruded bonding layer of LDPE. The resulting laminated bulk-to-barrier material web 36b is forwarded to be wound up on a reel for intermediate storage, or directly forwarded to subsequent lamination operations.

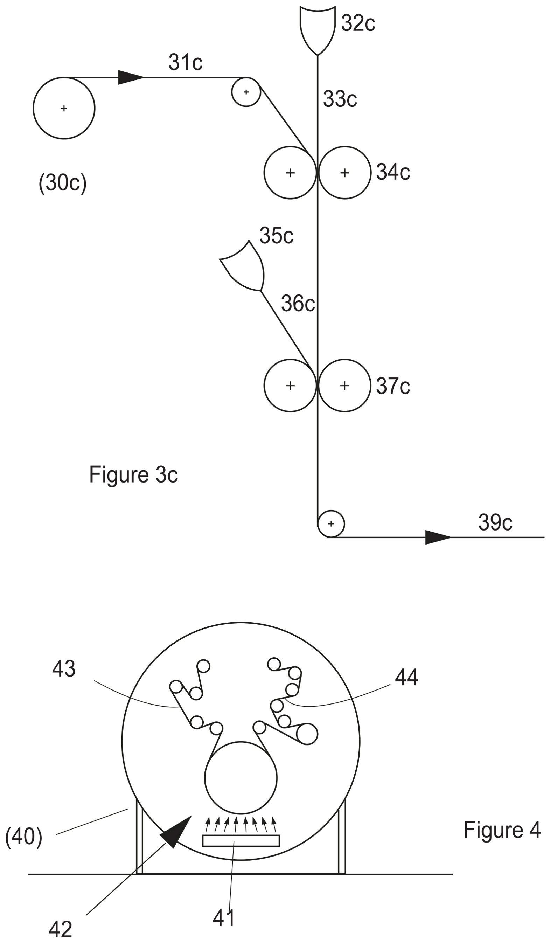

Fig. 3c shows a process for the final lamination steps in the manufacturing of the packaging laminate 20, of Fig. 2, after the bulk layer 21 has been first laminated to the barrier-coated paper substrate 10 of Fig. 1, (i.e. laminated to the layer arrangement 23 in Fig. 2). The resulting paper bulk-to-barrier, pre-laminate web 31c is forwarded from an intermediate storage reel, or directly from the lamination station for laminating the pre-laminate of the bulk layer to the barrier-coated paper substrate.

The non-laminated side of the bulk layer 21, i.e. its print side, is melt-extrusion coated by being joined at a cooled lamination roller nip 34c to a molten polymer curtain 33c of the LDPE, which is to form the outermost layer 22 of the laminated material, the LDPE being extruded from a first extrusion feedblock and die 32c. Subsequently, the pre-laminate bulk-paper web, now having the outermost layer 22 coated on its printed side, i.e. outside, passes a second extrusion feedblock and die 35c and a cooled lamination roller nip 37c, where a molten polymer curtain 36c is joined and coated onto the other side of the pre-laminate, i.e. on the barrier-coated side of the paper substrate 10; 23. Thus, the innermost heat sealable layer 25a, and an optional interjacent polymer layer 25b, optionally together with a tie layer of an adhesive polymer having functional groups to increase its bonding capability to adjacent layers, are coextrusion coated onto the inner side of bulk-barrier laminated web and the barrier-coated paper substrate, to form a finished laminated packaging material 20; 39c, which is finally wound onto a storage reel, not shown.

The two coextrusion steps at lamination roller nips 34c and 37c, may alternatively be performed as two consecutive steps in the opposite order.

According to an equally feasible embodiment, one or both outermost layers may instead be applied in separate pre-lamination stations, where the extrusion coated layer is first applied to the outside of the (printed) bulk paperboard layer and/ or onto the inside of the barrier-coated paper substrate, and finally thereafter, the two (pre-laminated) paper webs may be laminated to each other, by extrusion lamination or by wet lamination, as described above.

Fig. 4 is a diagrammatic view of an example of a plant for physical vapour deposition, PVD, of e.g. an aluminium metal coating, onto a web substrate of the invention. The base-coated paper substrate web 43 is forwarded through a vacuum deposition chamber, in which it is subjected, on its barrier-coated side, to continuous deposition 40, of evaporated aluminium, to form a metallized layer of aluminium. A standard aluminium metallization coating is normally provided at a thickness from 5 to 80 nm, such as from 10 to 80 nm, such as from 10 to 50 nm, to form a metal-deposition, barrier-coated paper substrate 44 of the invention. The aluminium vapour is formed from an aluminium evaporation source 41, via thermal evaporation from a resistive heated source.

Alternatively, the barrier aluminium metallization coating is oxygen-enriched by injection of additional oxygen 42 at the initial part of the deposition zone in an initial phase of the metal deposition step. The addition of oxygen into the vacuum deposition zone forces the initial coating of the base-coated paper substrate web 43 to become a reaction product of the evaporated aluminium and the oxygen, i.e. to form aluminium oxide. Rapidly, with the transportation of the base-coated paper substrate web 43 through the deposition zone, the oxygen concentration decreases to allow also pure metal aluminium deposition coating to be formed, which appearance is the same as a conventional, standard aluminium metallization coating. The metallic, second phase part of the metallization coating still has more oxygen in it than a standard aluminium metallization coating, in which the level of oxygen content in this second part and phase of the deposition coating is normally very low.

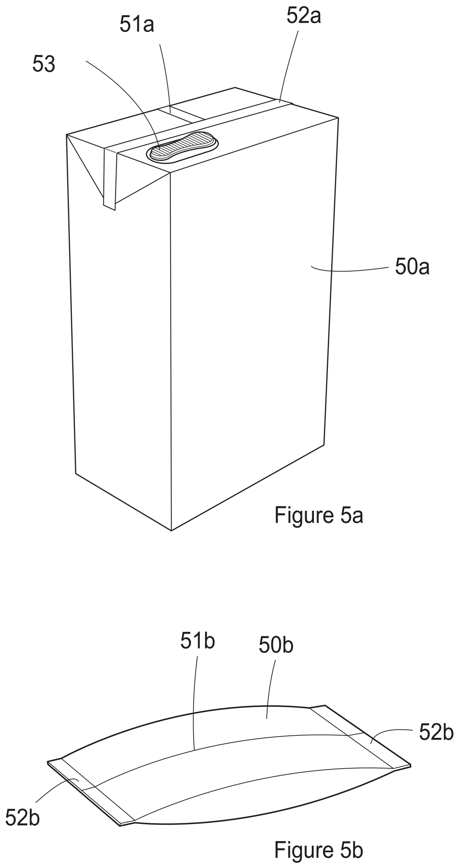

Fig. 5a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. To obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still easy to handle and dimensionally stable enough to put on a shelf in the food store or on any flat surface.

Fig. 5b shows an alternative example of a packaging container 50b produced from an alternative packaging laminate according to the invention. The alternative packaging laminate is thinner by having a thinner paper bulk layer, and thus it is not dimensionally stable enough to form a parallelepipedal or wedge-shaped packaging container and is not fold formed after transversal sealing 52b. The packaging container will remain a pillow-shaped pouch-like container and be distributed and sold in this form.

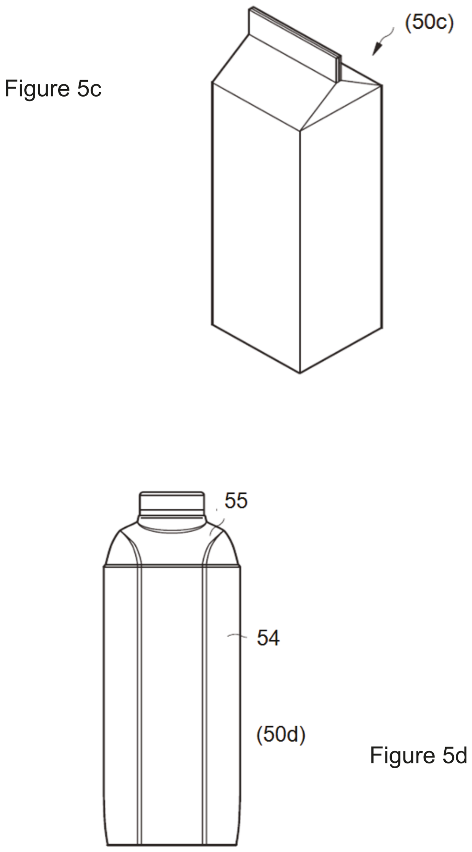

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages is for example marketed as Tetra Top^{®} packages, from Tetra Pak^{®}. Those packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

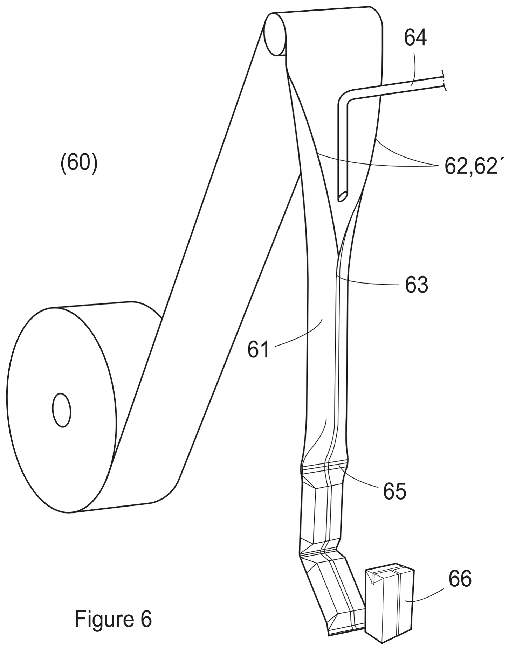

Fig. 6 shows the principle of the tube-filling and -packaging method 60 as described in the introduction of the present application, i.e. a web of packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

### Measurement methods

### OTR of laminated barrier materials

OTR of a laminated barrier material is measured with an Oxtran 2/21 or 2-/22 (Mocon) equipment using a coulometric sensor, according to ASTM ASTM D3985:2017 and F1927:2020.

The method for determining OTR on planar packaging material identifies the amount of oxygen per surface and time unit at passing through a material at a defined temperature and climate, a given atmospheric pressure, during a certain time, i.e at an atmosphere of 21 %, or alternatively 100 %, oxygen, expressed as 0.2 or 1 atm (oxygen), during 24 hours. The measurement unit relating to this invention is cm³/m²*24h*0.2 atm. For determining the OTR of the laminated materials in connection to this invention, measurements were thus carried out at 21 % oxygen (0.2 atm).

### OTR Package

The oxygen transmission rate of packages (filled, emptied and dried) was measured according to ASTM F1307:2020 and F1927:2020 (with some technical basis also in ASTM D3985:2017), at 0.2 atm (surrounding air containing 21 % oxygen). The unit is cm³/package/24h.

For the OTR measurement, the package was mounted on a special holder; inside the package nitrogen is purged; the outside of the package is exposed to the environment surrounding the instrument (room air). When oxygen permeates through the package into the nitrogen carrier gas, it is transported to the coulometric sensor. The sensor reads how much oxygen permeates into the nitrogen gas inside the package.

The climates at which the above OTR measurements of laminates and packages were performed were 23 °C/50 % Relative Humidity, RH, and 23 °C/ 80 % RH, at 0.2 atm oxygen (air containing 21 % oxygen).

### Package and packaging material integrity

Packages were produced from packaging laminates and filled with water. The packages were in the format of Tetra Brik^{®} with a volume of 200 ml. The packages were subsequently emptied, unfolded and studied at the areas of the inside of the laminate, which were exposed to maximal mechanical stress during the filling and forming operations. At these areas, the laminated material has typically been severely stressed by multiple folding and biaxial folding, and an example of such a location of e.g. a Tetra Brik^{®} package is at the bottom corner flaps.

The one or more polymer layer(s) on the inside of the metallization coating, i.e. on the side directed towards the filled product, were studied by X-ray tomography on the inside area of each package. X-ray tomography is an imaging technique that allows to distinguish between the various layers of the laminate, meaning that we can resolve and quantify the thickness of the pre-manufactured polyethylene films and of the inside polymer layers altogether.

Thus, the inside areas of the packages were evaluated to one of three levels depending on average frequency and size of small weakenings and imperfections, so-called defect initiations or thinnings, in the inside polymer layers. Although there were no or hardly any actual defects seen in the inside polymer layers, in any of the studied laminates and packages, the evaluation of the initiations, i.e. of potential later appearing defects upon severe further stress and strain of the filled packages, provides an overview of the risk for eventual leakages or un-tightness to occur. The evaluation levels were:
1 = Approved, low level of polymer thinnings and defect initiations as visible by X-ray analysis, ("OK")
2 = Higher approved level of polymer thinnings and defect initiations as visible by X-ray analysis, still within safety margin to prevent potential actual defects to develop, ("Acceptable")
3 = Not approved level of polymer thinnings and defect initiations as visible by X-ray analysis, i.e. not within safety margin to prevent potential actual defects to develop under severe circumstances ("Not acceptable")

Further, the metallization coating of the paper barrier structure in the laminated packaging material of an unfolded package according to the above was evaluated by visible inspection of the double-folded areas with the aid of a magnifying instrument. For this evaluation, a Peak instrument 1983 at magnification of 10 times was used, providing a resolution and precision of 0.1 mm. Fine defect lines or crack initiations were measured, noted and counted and were divided into three levels depending on the width measured of each defect line. Accordingly, the proportion of very fine defect initiations having a width up to 0.3 mm, was determined, further the proportion of the category of defect initiations having a width above 0.3 and up to 0.5 mm, and also the proportion of a third category of larger defect initiations having a width above 0.5 mm was determined.

### Surface weight (grammage) and thickness

Grammages of paper substrates were determined according to the official test method of ISO 536:2019 by the unit g/m², while thickness and density were determined according to ISO 534:2011, by the units µm (m) and kg/m³, respectively.

General thickness measurements of coated polymer layers on paper and in laminate structures may be measured in µm by taking sliced section samples of the structure and studying them in a SEM microscope. The slicing may be done using e.g. a microtome.

### Surface properties

Bendtsen surface roughness is measured according to ISO 8791-2:2013.

Gurley porosity is measured according to ISO 5636-5:2013. The unit for Gurley porosity values is seconds/100 cm³.

A different measurement of the surface roughness is the Parker Print Surface (PPS) roughness, as measured according to ISO 8791-4:2021.

The water absorption of the paper substrate is measured by the Cobb 60 method according to ISO 535:2014 and is in a way a measure of "coatability" of the paper substrate surface, i.e. the ability to be coated by an aqueous solution composition of a gas barrier polymer. If the surface absorbs too much of the solution before drying, the thinly applied wet coating will be broken and cannot form a continuous coating of the gas barrier polymer. The measured Cobb 60 values are provided in g/m².

### Equilibrium moisture content

The paper substrate of the invention is also measured regarding so-called "Equilibrium moisture content", Eq. MC, according to ISO 287:2017, after conditioning at standard atmosphere according to ISO 187:2022. The test method measures the ability of the paper to maintain a moisture content at specified climate conditions, such as at an ambient climate of 23 °C, and 50 % RH.

### Tensile energy absorption (TEA) and Tensile energy absorption Index (TEA Index)

The tensile energy absorption, TEA, in J/m², is measured of the paper substrate of the invention to define its toughness when subjected to tensile force, in accordance with ISO 1924-3:2005.

By dividing the measured TEA value with the surface weight of the paper (as measured according to ISO 536:2019), its indexed TEA property can be determined, i.e. its tensile energy absorption index, TEA Index, thus provided in J/g.

Both the TEA and TEA Index properties are measured and calculated as a geometrical mean, GM, value, which is the square root of the product of the value measured in the machine direction, MD, of the paper, with the value measured in the cross direction, CD, of the paper. Accordingly, the TEA (GM) value is calculated as √ MD*CD of the measured TEA values and provided as J/m². Similarly, the TEA Index (GM) value is calculated as √ MD*CD of the measured TEA Index values and provided as J/g.

### Tensile strength

The tensile strength of a paper is measured in the machine and cross directions, MD, CD, according to ISO 1924-3:2005, as values provided in kN/m.

### Young's Modulus (elastic modulus, tensile modulus)

Young's modulus (E-modulus) of a paper is measured in the machine and cross directions, MD, CD, according to ISO 1924-3:2005, as values provided in MPa.

### Total tensile energy absorption, TTEA

The total tensile energy absorption, TTEA, may be determined in accordance with a short span tensile test, in the MD and CD or as a geometrical mean value (GM) and provides measured values in Nmm. The short span tensile test is a non-standardized method, however described in the International Journal of Damage Mechanics 26 (6):895-918 (2017) Tryding et. al. in an article titled "Experimental and theoretical analysis of in-plane cohesive testing of paperboard". This test takes all energy absorption into account, also after the paper sample in the tensile tester has reached a state of peak stress, i.e.it captures not only the ascending part of the stress-strain curve but also the descending part. This is believed to provide a better understanding of the performance and prevailing mechanisms when a paper is loaded until fracture.

### Shives content

"Shives" are uncooked or undisintegrated bundles of fibres or splinters in wood pulp that may show up as imperfections in the finished sheet of paper made from it, if not previously removed. In chemical pulp, a shive may be defined as a fibre bundle that is at least 1 mm long and cannot pass through a 0.15 mm slit. Sometimes, shives are also called "slivers" or "shiners". Shives are measured as number per grams (#/g) of a fibre composition or pulp in papermaking, or after re-pulping of a paper. For the present invention, the measurement is done according to the test method FA 10.402 from "Pulpeye". The sample preparation is done according to ISO 5263-1:2004 "Pulps - Laboratory wet disintegration", which specifies an apparatus and the procedure for the laboratory-wet disintegration of chemical pulps. According to this method, a shive is defined as a particle or "fibre bundle" having a width larger than 75 µm and a length larger than 0.3 mm. The width and length dimensions are evaluated from a (2-dimensional) image, the length being the longest dimension of the object and the width being calculated as an average width from the area divided by the length of the object.

### LW fibre length

The length of the fibres evaluated in the paper substrate of the invention is a length-weighted, LW, average fibre length, as measured according to ISO 16065-2:2014, which is a method involving unpolarized light, with measured values provided in mm. The sample preparation is done according to ISO 5263-1:2004 "Pulps - Laboratory wet disintegration" standard method.

### Canadian Standard Freeness (CSF)

Canadian Standard Freeness, CSF, of the fibres in the substrate paper is measured according to ISO 5267-2:2001 after disintegration according to ISO 5263-1:2004. The test method measures the rate of drainage of a diluted pulp suspension. The drainage rate is related to the surface properties and swelling of the fibres as well as to the amount of fines. It may be used to track the changes in the drainage rate of various chemical pulps during beating and refining. CSF values thus measure the dewatering properties of the fibres in a cellulose fibre pulp and indicate how easy or difficult it would be to dry a paper, which in turn influences the effectiveness of repulping and recycling of the fibres from the paper substrate, and consequently also of the laminated packaging materials comprising the paper substrates.

### Non-bleached, unbleached cellulose

The meaning of the fibre composition in the paper substrate being unbleached is that there has not been performed a bleaching step in the preparation of the fibre pulp used for manufacturing the paper, such that a major amount, i.e. more than 50 weight-% of the fibres, have not been bleached, and the result will inevitably be a coloured fibre composition and a coloured paper, with a colour ranging from light beige to dark brown.

The colour range covering non-bleached paper beige-to-brown "earthy" colours can be expressed in accordance with the CIELAB color space as having a lightness L from 30 to 85, a value on the green-red axis, a*, from 0 to 18 and a value on the blue-yellow axis, b*, from 10 to 40.

A non-bleached paper may alternatively be defined by a certain "ISO brightness" value, which is a method for measuring the diffuse blue reflectance factor. It is measured according to ISO 2470-1:2016 at indoor light conditions.

### Transmission electron microscopy (TEM)

The thickness and nature of metallic or inorganic thin vacuum and vapour deposited coatings may be studied by Transmission electron microscopy (TEM), which is a microscopy technique in which a beam of electrons is transmitted through a specimen to form an image. The specimen is most often an ultrathin section less than 100 nm thick. An image is formed from the interaction of the electrons with the sample as the beam is transmitted through the specimen. The image is then magnified and focused onto an imaging device, such as a fluorescent screen, a layer of photographic film, or a detector such as a scintillator attached to a charge-coupled device or a direct electron detector. Transmission electron microscopes are capable of imaging at a significantly higher resolution than light microscopes, owing to the smaller de Broglie wavelength of electrons. This enables the instrument to capture detail as small as a single column of atoms, which is thousands of times smaller than a resolvable object seen in a light microscope. The contrast of TEM images is related to the distinction between transmitted and scattered electrons. The contrast obtained on amorphous specimen depends on the thickness and the electronic density of the specimen. The contrast obtained on crystalline specimen is largely influenced by Bragg diffraction. There are basically two TEM modes, dark and bright field. One of the main differences between the bright field and dark field mode is which electron populations are used to construct the TEM image. Bright field (BF) at 300 kV with a contrast diaphragm was used for measuring the samples herein.

### Ultramicrotomy

Ultramicrotomy is a method for cutting specimens into extremely thin slices, called ultra-thin sections, that can be studied and documented at different magnifications in a transmission electron microscope (TEM). It is used mostly for biological specimens, but sections of plastics and soft metals can also be prepared. Sections must be very thin because the 50 to 125 kV electrons of the standard electron microscope cannot pass through material much thicker than 150 nm. For best resolution, sections should be from 30 to 60 nm. A piece of each sample was embedded in an epoxy resin, which was polymerized. Transverse cuts were done by ultra microtomy at room temperature, to 50 nm thick sections.

### Sheet resistance (Rs)

Sheet resistance (Rs) of a metallisation coating measured by a contactless method on a laminated material, by means of an instrument for contactless eddy current measurements, such as of the type SRM-12 or SRM-14 instrument, from Nagy Instruments, Germany. The set range for measurements in connection to the present invention was from 0.2 to 8 Ohms. Measurements were performed on laminated packaging materials as well as on metallised material only, on samples of a size of 0.05 x 0.05 meters (5 by 5 cm). Nine measure points were taken from a 1 meter long portion of a web of 0.17 m width, i.e. three measure points from the middle of the web and three measure points closer to each of the respective ends of the web portion. On a sample of homogenous density, the sheet resistance is the value Rs given by the principal formula Rs= rho / t, wherein t is the thickness of the sheet and rho is the bulk resistivity of the material. The unit is measured as ohms / square (Ω/□). The Nagy instruments use the "transmission mode" for the measurements and the accuracy is high at up to a 0.03 Ω/□ precision of measurements. The measurements may also be made by similar instruments from Suragus GmbH, Germany, such as by a "Suragus EddyCus^{®} portable 1010" instrument, working in the "reflection mode" with similar precision of measurements.

### Optical density of a metal coating, such as an aluminium metallization deposition coating

Optical density of a metallization coating is measured in production by means of a densitometer, i.e. an instrument (such as from Macbeth, Tobias or similar), which uses the principle of diffuse light transmission. The instrument is suitable for measuring the optical density values of films coated with aluminium metallization. The accuracy and precision of the measurements is high and about +/- 0.2 OD and about +/-0.01 OD, respectively, within a measuring range from 0 to 6.60 OD. In lab measurements, a spectrophotometer may alternatively measure the light transmission over the full visible spectrum (380-800 nm). The optical density is calculated from the light transmission (T, also referred to as I₁/I₀ i.e. ratio of incident light to transmitted light) value at 560 nm, according to a formula OD= -log₁₀(I₁/I₀) and the values obtained are equally accurate (+/- 0.2 OD) and comparable to light transmission densitometer values.

### Examples

### Inventive Example 1

A laminated packaging material was prepared with the principal structure of
/outermost layer / bulk layer / intermediate bonding layer / gas barrier coated paper substrate/ inside polymer layers (tie layer, optional interjacent layer, innermost layer)/.

The laminated packaging material as tested in this Example thus had the following, simple structure:
/12 g/m² LDPE / paperboard (bulk layer) / 20 g/m² LDPE / 30-70 g/m² substrate paper / PVOH coating and metallization (applied onto the substrate paper) / 6 g/m² EAA / 29 g/m² blend of LDPE and mLLDPE (30:70 weight ratio) /

The paperboard bulk layer was a CLC/C Duplex liquid packaging board having a bending stiffness 80 mN (GM) and basis weight 200 g/m², being clay-coated on the outer surface and having an uncoated fibrous inner surface.

The LDPE in the outermost layer and intermediate bonding layer of the inside polymer layers was 19N730 from Ineos.

The EAA in the tie layer was Primacor 3540 from Dow.

The polymers of the innermost layer blend were LDPE 770G from and mLLDPE Elite 5860 from Dow.

The PVOH coating was applied in two consecutive steps of coating each about 0.8 g/m2, dry weight, of an aqueous PVOH solution of Poval^{®} 15-99 from Kuraray with intermediate and subsequent drying.

The metallization of the thus PVOH-coated and dried paper barrier substrate was performed by physical vapour deposition, PVD, of evaporated aluminium metal, in a metallizing equipment "Expert K5", from Bobst Manchester Ltd, UK. The metal vapour is deposited as a mixture with added oxygen gas injected at the entry of the deposition chamber and the deposition zone, to form aluminium oxide at the interface of the metallization coating to the substrate surface. The formed aluminium oxide had the average formula Al₂O₃. The further coating phase deposits higher proportion of aluminium metal with a much lower oxygen content. The thus oxygen-enriched metallization layer was applied until a sheet resistance of 0.5 Ω/□ was reached, resulting in a coating having an aluminium metallic and shiny appearance, equal to a metal appearance and sheet resistance obtained without any injection of additional oxygen. The paper substrate for the barrier coatings was a tough, high-quality Kraft paper from Delfort Group AG, with the grade name TerTrans E47 and marketed as suitable for electrical insulation. The characteristics of the TerTrans E47 paper is it's good mechanical properties upon exposure to tensile stress and its ability to maintain a good equilibrium moisture content, at least partly due to its high-purity, unbleached composition of long, well separated and moderately refined cellulose fibres. The properties of the TerTrans E47 paper are presented in Table 1.

### Comparative Example 1

A laminated packaging material was prepared in the same way as in Example 1 with the only difference that the paper substrate was a standard Kraft paper of conventional, mixed, bleached fibre content, having the characteristics and properties as presented in Table 1.

### Comparative Examples 2 and 3

Laminated packaging materials were prepared in the same way as in Example 1 with the only difference that the paper substrates were other standard Kraft papers of conventional, mixed, bleached fibre content, having the characteristics and properties as presented in Table 1.

**Table 1**

| **Paper substrate properties** | **Inventive Example 1** | **Comparative Example 1** | **Comparative Example 2** | **Comparative Example 3** |
|---|---|---|---|---|
| **General fibre type** | Kraft (chemical) unbleached | Kraft (chemical) bleached | Kraft (chemical) bleached claycoated + supercalendered | Kraft (chemical) bleached |
| **Fibre origin** | SW (softwood) 100 % | Kraft mix SW + HW (hardwood) (~53:47 SW:HW) | Kraft mix SW + HW (hardwood) (~70:30 SW:HW) | Kraft mix SW + HW (hardwood) (~54:46 SW:HW) |
| **Thickness (µm)** | 52 | 40 | 53 | 38 |
| **ISO 534:2011** | | | | |
| **Surface weight (g/m²)** | 47 | 39 | 55 | 45 |
| **ISO 536:2019** | | | | |
| **Density ISO 534:2011 (kg/m³)** | 931 | 978 | 1107 | 1173 |
| **TEA (GM J/m²)** | 91 | 78 | 83.7 | 51 |
| **ISO 1924-3:2005 at 50% RH, 23°C** | | | | |
| **TEA Index (GM J/g)** | 1.9 | 2.0 | 1.5 | 1.1 |
| **ISO 1924-3:2005 at 50% RH, 23°C** | | | | |
| **TEA Index ratio CD/MD** | 1.60 | 2.25 | 1.22 | 1.29 |
| **Equilibr. Moisture Content (Eq. MC) at 50% RH, 23 °C** | 7.7 | 6.9 | 5.5 | 7.0 |
| **ISO 287:2017 (%)** | | | | |
| **Average Fibre length (mm) ISO 16065-2:2014, after sample preparation acc. to ISO 5263-1:2004** | 1.73 | 0.99 | - | 1.10 |
| **Total Shives content, (#/g) FA 10.402 by Pulpeye** | 696 | 7803 | - | 5551 |
| **Bendtsen (print) surface properties (ml/min)** | 79 | 19 | 14 | 6 |
| **ISO 8791-2:2013** | | | | |
| **CSF (ml) ISO 5267-2:2001, after disintegration** | 215 | 205 | 295 | 490 |
| **ISO 5263-1:2004** | | | | |
| **Tensile strength MD (kN/m)** | 5.3 | 3.9 | 5.8 | 4.7 |
| **ISO 1924-3:2005** | | | | |
| **Tensile strength CD (kN/m)** | 2.7 | 2.1 | 2.0 | 2.1 |
| **Young's modulus, MD, (MPa)** | 11267 | 11241 | 12642 | 15656 |
| **ISO 1924-3:2005** | | | | |
| **Young's modulus, CD, (MPa)** | 5121 | 5404 | 4962 | 7271 |
| **Total Tensile Energy Absorption, TTEA, GM, (Nmm)** | 30.2 | 15.7 | 20.2 | 15.0 |
| **Tryding et al** | | | | |
| **Cobb 60 ISO 535:2014 (g/m²)** | 47 | 17 | - | 18 |
| **CIELAB L*a*b*** | 60.5* 8.4* 20.1 | 92.2* -0.3* 3.1* | 89.4* -0.9* 1.1* | - |
| **Brightness (%)** | 15.6 | 80.6 | - | 74.7 |
| **ISO 2470-1:2016** | | | | |

Laminated packaging materials were formed, comprising the Inventive and the Comparative barrier-coated paper substrates of Inventive Example 1 and of Comparative Examples 1 and 2, as follows. The paperboard web was unwound, printed on its outer surface and provided with creasing lines for subsequent folding in register with the thus printed décor, and again wound onto a reel. DLI lamination was conducted. Thus, the outermost layer of LDPE was first extrusion coated onto the outer surface of the paperboard and solidified in a lamination roller nip including a cooled roller. In a next step, the paperboard was melt-extrusion laminated to the paper substrate of the barrier-coated paper with LDPE as a bonding polymer. The paper barrier multilayer was thus oriented with the metallization coating directed towards the inside polymer layers and the paper barrier substrate directed towards the paperboard bulk layer and the two webs of material layers were pressed together with the solidifying interjacent lamination layer of LDPE in a cooled lamination roller nip. The tie layer and the innermost layer, i.e. the inside polymer layers, were co-extrusion coated onto the inner surface of the barrier metallization coating in a final lamination step, involving a lamination roller nip.

The laminated material samples obtained were formed into water-filled packaging containers of 200 ml size and Tetra Brik^{®} Slim shape, in a Tetra Pak^{®} A3/Compact Flex filling machine, by hot air sealing of the longitudinal seal and ultrasonic heat sealing of the transversal heat seals. The obtained packages were emptied and evaluated regarding package integrity and package oxygen transmission rate at 25 °C and 50 % RH.

The measured OTR values were rather similar on the packages from the Comparative Examples 1 and 3, and both below 0.05 cm³/package/day. In separate evaluation, packages made from the laminated materials similar to the one of Comparative Example 2 also had good OTR values below 0.05 cm³/package/day. The OTR values measured on packages of Inventive Example 1 were slightly higher, however, i.e. just above 0.07 cm³/package/day. The higher OTR value is due to the relatively rough surface of the paper substrate used in the barrier-coated paper substrate of Inventive Example 1, before coating. There is thus high potential for further improvements regarding the preparation of the surface of the paper substrate for coating and consequently of the quality of the barrier coatings, and possibly inherent gas barrier provided by the barrier-coated paper substrate. The paper substrate used in the tests was a commercial paper not even intended for coating and thus needs further surface optimization in this respect.

A further 25 packages from the same tests were emptied, unfolded and studied at the areas of the inside of the laminate, which were exposed to maximal mechanical stress during the filling and forming operations. At these areas, the laminated material has typically been severely stressed by multiple folding, and an example of such a location of a Tetra Brik^{®} package is at the bottom corner flaps.

The polymer layers on the inside of the metallization coating, i.e. on the side directed towards the filled product, were studied by X-ray tomography at these areas of each package and categorized into three evaluation levels as presented in Table 2, depending on average frequency and size of the defect initiations in the inside polymer layers.

The evaluation levels were:
1 = Approved, low level of polymer thinnings and defect initiations as visible by X-ray analysis, ("OK")
2 = Higher approved level of polymer thinnings and defect initiations as visible by X-ray analysis, still within safety margin to prevent potential actual defects to develop, ("Acceptable")
3 = Not approved level of polymer thinnings and defect initiations as visible by X-ray analysis, i.e. not within safety margin to prevent potential actual defects to develop under severe circumstances ("Not acceptable")

**Table 2**

| X-ray tomography study of defect initiations in inside polymer layers; evaluation level 1-3 | Inventive laminate 1 | Comparative laminate 1 | Comparative laminate 3 |
|---|---|---|---|
| Level 1 | 100.0 % | 89.5 % | 78.3 % |
| Level 2 | 0.0 % | 10.5 % | 17.4% |
| Level 3 | 0.0 % | 0.0 % | 4.3 % |

Furthermore, the metallization coating of the paper barrier structure was evaluated by visible inspection of the double-folded areas with the aid of a magnifying instrument of another 100 packages. For this evaluation, a Peak instrument 1983 at magnification of 10 times was used, providing a resolution and precision of 0.1 mm. Table 3 shows the evaluation of very fine defect lines or crack initiations, in the metallization.

**Table 3**

| Defect lines at area of multiple folding in 100 packages | Inventive laminate 1 | Comparative laminate 1 | Comparative laminate 3 |
|---|---|---|---|
| Number of defect lines having a width at most 0.3 mm | 100.0 % | 82.0 % | 79.0 % |
| Number of defect lines having a width above 0.3 mm, at most 0.5 mm | 0.0 % | 17.1 % | 20.0 % |
| Number of defect lines having a width above 0.5 mm | 0.0 % | 1.0 % | 1.0 % |
| Max value width of defect line (mm) | 0.3 | 0.6 | 0.6 |

Thus, it is concluded that the barrier-coated paper substrate, and the laminated materials comprising it, of the present invention has an improved mechanical robustness, such that there is a better safety margin for package integrity, meaning that the inside polymer layers will remain intact and protect the filled contents throughout the storage, distribution and lifetime of the packages. The improved properties of the paper substrate seem to resist defects and cracks upon bending and fold-forming and thus can support the sensitive barrier coatings in the paper barrier material in an improved manner. It is clear from the measurements of the polymer inside layers that the lowest level of few and small polymer thinnings can be kept and that laminated material of the invention will not require extra polymer layers on the inside of the barrier to ensure good package integrity. Thus, there may be no need for a tough, i.e. load-bearing, polymer film or layer in the configuration of polymer layers positioned inside of the barrier-coated paper substrate. A simple co-extrusion of conventional, lower density polyethylene, including LDPE and m-LLDPE, for the heat sealable inside polymers should be sufficient to produce well sealed packages having good package integrity altogether.

As clearly seen in Tables 2 and 3, a significantly better mechanical performance is obtained upon fold-forming, filling and sealing of the laminated packaging material into packaging containers, when comprising the paper substrate of Inventive Example 1. This effect is directly related to the significantly higher measured values of the TTEA on the Inventive paper substrate vs the other, previously tested, lower performing paper substrates of the Comparative Examples 1-3. It is also reflected by the combined view of the TEA Index GM and TEA Index CD/MD ratio values, as measured on the same paper substrates and presented in Table 1.

### Measurements of properties of a partial laminate of the laminated barrier-coated paper and inside polymer layers

The paper substrates of Inventive Example 1 and Comparative Examples 1 and 3 were barrier-coated and laminated in the same way and with the same materials as in Example 1.

Samples were prepared for tensile tests and moisture content.

First the packaging material sheets were stored in 23°C/50% RH for 24 hours.

Then, samples were prepared by pulling apart the packaging material sheets by splitting them in the bulk layer, i.e. in the paperboard layer.

The part comprising the inside barrier laminate, i.e. comprising the intermediate polymer bonding layer, fibre barrier and inside polymer layers (the polymer bonding layer laminating the bulk layer to the barrier layer), was taped on the sheet edges, with the inside (corresponding to package inside) facing down and towards a rigid surface to fixate the sheets. The remaining bulk paperboard fibers were removed by gentle soaking with tap water and abrasion using the rough side of a kitchen sponge.

After removal of the residual paperboard fibres the barrier laminate was cut to samples for tensile testing, requiring at least 10 pieces for each test direction (MD and CD) with dimensions 15 mm x 150 mm.

The samples were conditioned at 23°C/50% RH for 24 hours.

Thickness was measured according to ISO 534:2011.

Tensile tests were performed using a universal tensile testing machine according to ISO 1924-3:2005 "Paper and board - Determination of tensile properties Part 3: Constant rate of elongation method" (100 mm/min).

The obtained tensile test data was used to calculate tensile energy absorption TEA geometrical mean, GM, as J/m2, TEA Index (GM J/g), TEA Index ratio CD/MD.

The Equilibrium moisture content was measured according to ISO 287:2017, at 50 % RH and 23 °C, as conditioned according to ISO 187:2022. The weight of the polymer layers was subtracted from the weight of the barrier laminate in the calculation of equilibrium moisture content.

**Table 4**

| **Properties of Barrier-coated paper and inside polymer layers as laminated together** | **Inventive Example 1** | **Comparative Example 1** | **Comparative Example 2** | **Comparative Example 3** |
|---|---|---|---|---|
| **General fibre type** | Kraft (chemical) unbleached | Kraft (chemical) bleached | Kraft (chemical) bleached claycoated + supercalendered | Kraft (chemical) bleached |
| **Fibre origin** | SW (softwood) 100 % | Kraft mix SW + HW (hardwood) (~53:47 SW:HW) | Kraft mix SW + HW (hardwood) (~70:30 SW:HW) | Kraft mix SW + HW (hardwood) (~54:46 SW:HW) |
| **Surface weight (g/m²)** | 100.8 | 92.8 | - | 98.8 |
| **ISO 536:2019** | | | | |
| **Equilibrium moisture content of the paper in the laminated inside at 50% RH, 23 °C** | 7.7 | 6.5 | - | 6.7 |
| **ISO 287:2017 (%)** | | | | |
| **TEA GM (J/m²)** | 168 | 118 | - | 90 |
| **ISO 1924-3:2005 at 50% RH, 23°C** | | | | |
| **TEA Index GM (J/g)** | 1.7 | 1.3 | - | 0.9 |
| **ISO 1924-3:2005 at 50% RH, 23°C** | | | | |
| **TEA Index ratio CD/MD** | 1.98 | 2.33 | -- | 1.7 |

From the measured values in Table 4, and as it can be concluded that the paper substrate of Inventive Example 1 shows a higher geometrical mean tensile energy absorption, i.e. toughness, than both Comparative Examples 1 and 3. Particularly, the toughness for the paper substrate of Inventive Example 1 is combining the feature of being both high and fairly even when comparing the values in the machine direction (MD) and cross direction (CD). This means that the geometrical mean value of the toughness is high and with a not too high ratio between the toughness in CD and MD, which is believed to be largely beneficial in order to resist thinning and defect initiation in both uni-axially and bi-axially loaded zones when fold-forming packages. As a measure of the resistance to thinning and defect initiation during fold-forming of packages it is of high relevance to also compare toughness for the packaging material inner part containing the intermediate bonding layer, the barrier coated paper, the tie layer and the inside polymer layers, i.e. the so-called "barrier laminate". Interestingly and surprisingly, the improvement of geometrical mean toughness of the barrier laminate of the Inventive Example 1 compared to the barrier laminate of e.g. Comparative Example 1 is even larger, in relation to the improvement of the paper substrate of Inventive Example 1 compared to the paper substrates of Comparative Examples 1 and 3. Thus, it is believed that the paper substrate of Inventive Example 1 is significantly more robust and suitable for use in fold-formed packages than the paper substrates of the Comparative Examples, which represent the current state of the art regarding barrier-coated paper substrates for use in liquid carton packaging. These conclusions are also supported by the diagram in Figure 7, that shows how the TEA varies for the papers and part-laminates of Inventive example 1 and Comparative Examples and 3, in MD, CD and as GM.

The Equilibrium moisture content of the paper substrate can be determined also after it is/ has been laminated with polymer layers. As seen in Table 4, the Equilibrium Moisture Content was higher and better maintained in the paper substrate of Inventive Example 1, after having been exposed to heat from drying processes in barrier-coating operations and subsequent lamination with hot, molten polymer layers, than in the corresponding laminated, barrier-coated paper substrates of Comparative Examples 1-3.

The following advantages can accordingly be achieved by the invention.

The use of the paper substrate and the barrier-coated paper substrate as described above and claimed herein, can provide laminated packaging materials better suited for fold forming and thus further provides improved fold-formed packaging containers having better package integrity. This is especially seen at the most sensitive folded areas of the laminated packaging material, i.e. at areas of double and bi-axial folding, in that the polymer layers on the inside of the barrier-coated paper substrate have an even and intact thickness without defect initiations in the form of so-called "thinnings" and in that there are no visible defect initiations in the barrier-coatings or the paper substrate, visible as "defect lines" or crack initiations. Consequently, it will not be necessary to add extra polymer on the inside of the barrier-coated paper substrate to cope with folding-induced strain and compensate for thinning of the polymer inside layers. It will thus not be necessary to include mechanically stronger, so-called "load-bearing", polymers or pre-made, "load-bearing" oriented polymer films, within the configuration of the inside polymer layers. Accordingly, by providing a more flexible paper substrate, economical and environmental costs may be saved by reducing the amount of polymer materials towards the inside of the laminated material.

It has thus proven possible to provide a paper substrate having better adapted properties for the purpose, being more suitable for barrier coating and subsequent lamination into durable, fold-formable packaging materials and further into mechanically robust packaging containers, in particular suitable for oxygen-sensitive liquid food contents.

From the test results underlying the present invention, it has been seen that there is good potential for optimizing also the oxygen barrier of the barrier-coated paper substrate that was actually tested, by taking suitable measures to improve the top surface of the paper substrate, i.e. the receiving surface for the barrier coatings. Such measures may be to provide the paper substrate with impregnation or a pre-coating with a polymer composition and subsequent drying and supercalendering, to make the receiving surface smoother and denser (i.e. not porous) or "closed" to absorption of a subsequently applied aqueous gas barrier coating.

There are also opportunities to further optimize the fibre composition of the paper substrate to optimize the paper altogether towards obtaining a better coating surface without losing its advantageous mechanical properties, i.e. mainly its toughness, as seen from its tensile energy absorption properties, and its ability to maintain a good equilibrium moisture content and not dry out too easily. This may be achieved e.g. by addition of some hardwood fibres to the fibre composition.

The laminated packaging material may further be provided with improved re-pulpability and recycling properties, i.e. increased sustainability, thanks to the increased content of easily re-pulpable, well drainable, fibrous cellulose composition of the barrier-coated paper substrate.

The high quality of the fibre composition of the paper substrate used according to the invention also enables recycling of the cellulose fibres into new cellulose products of higher value, which is important in a circular economy of repeated recycling of materials.

Moreover, the use of a tough but thin paper substrate as a "facing layer" on the inside of a carton bulk layer in a sandwich configuration, can support using bulk materials having a lower bending stiffness, thus being less complex in design for a maximized bending stiffness in the total laminated material, and/ or using a cellulose bulk material of lower density and thus using lower amounts of fibres, thus saving raw materials altogether.

Furthermore, by applying an oxygen-enriched barrier aluminium metallization coating instead of a standard, conventional metal-vapour deposited metallization layer, to a sufficient sheet resistance, an improved laminated material for use in an induction heat sealing process may be obtained, having a lower risk for defects in the critical LS-TS area, i.e. where the overlapping longitudinal heat seal area meets (crosses) the transversal heat seal area. This is the topic of a co-pending application of Applicant.

The barrier-coated paper substrate having such an oxygen-enriched aluminium metallization coating also exhibits increased stability of the initial oxygen gas-barrier properties in laminated packaging materials and in filled, heat-sealed packaging containers made therefrom, surprisingly also during long-term storage and use. Improved stability in high humidity climate conditions is enabled, i.e. when filled with liquid food products, and additionally at continuous, longer-term storage in climates of high humidity also on the outside of the package. Considering that the paper substrate and its adjacent moisture-sensitive gas barrier coating of a gas barrier polymer is not shielded from migrating water vapour (moisture) from any side, such improved oxygen gas barrier stability at high humidity can likely also compensate for slightly lower, initial oxygen barrier properties of the laminated packaging material, as it still improves how well the filled food product may be preserved during long-term, ambient storage. By only adding a very low amount of oxygen to a conventional aluminium deposition metallization coating, these excellent results were achieved, especially useful for long-term packaging of wet or liquid, oxygen-sensitive food products.

As a final remark, the invention is not limited by the embodiments shown and described above but may be varied within the scope of the claims.

List of reference numerals:
10 barrier-coated paper substrate
11 paper substrate
12 gas barrier coating
13 metallization coating
14 pre-coating layer (optional)
15 protective and/or heat-sealable coating (optional)
16 protective and/or heat-sealable coating (optional)
20 laminated packaging material
21 bulk layer
22 outermost, transparent and protective material layer
23 barrier-coated paper substrate
24 inside polymer layer structure
25 innermost, heat sealable, liquid tight layer
25a innermost layer - alternative embodiment
25* interior bonding layer (embodiment with 25)
25b interior bonding layer (embodiment with 25a)
26 intermediate bonding layer - melt extrusion lamination
26* intermediate bonding layer - wet lamination
27 printed décor pattern
28; 28a melt extrusion laminated bonding-layer (adhesive polymer/ "tie" layer)
30a aqueous dispersion/ solution coating
31a paper/ paper substrate web
32a dispersion coating station
33a drying step (hot air dryer)
34a barrier coated paper substrate
30b extrusion lamination
31b bulk layer
32b extrusion feedblock and die
33b thin molten polymer curtain of e.g. LDPE
34b barrier-coated paper substrate
35b nip of lamination rollers
36b laminated material
30c final lamination steps
31c bulk-to-barrier pre-laminate web
32c first extrusion feedblock and die
33c molten polymer curtain (LDPE)
34c cooled lamination roller nip
35c second extrusion feedblock and die
36c molten polymer curtain
37c cooled lamination roller nip
39c finished laminated packaging material
40 PVD plant
41 aluminium evaporation source
42 injection of additional oxygen
43 base-coated paper substrate web
44 metal-deposition, barrier-coated paper substrate web
50a packaging container
50b pouch container
50c gable top package
50d bottle like package
51a longitudinal seal
51b longitudinal seal
52a transversal seal
52b transversal seal
53 opening device
54 sleeve
55 top
60 tube-filling and -packaging method
61 tube
62, 62' edges of web
63 overlap joint
64 filling of tube
65 double transversal seal
66 final, filled packaging container

## Claims

1. Use of a paper substrate for a gas-barrier coated paper substrate and its further use in a laminated packaging material for packaging of oxygen-sensitive food products, such as liquid, semi-liquid or viscous food and beverage products, wherein the paper substrate (11) has
a thickness from 25 to 100 µm and a density from 700 to 1500 kg/m³, as determined according to ISO534:2011, and
is made from a cellulose fibre composition comprising from 65 to 100 weight- % of chemical softwood fibres, having a length-weighted, average fibre length from 1.2 to 2.5 mm, as determined according to ISO 16065-2:2014, after sample preparation according to ISO 5263-1:2004,
the cellulose fibre composition comprising fewer than 5000 shives per gram of fibre composition, as determined according to the method FA 10.402 from Pulpeye after sample preparation according to ISO 5263-1:2004,
the paper substrate further having a tensile energy absorption index, TEA Index, Geometrical Mean, GM, above 1.3 J/g as measured at 50 % RH and 23 °C according to ISO1924-3:2005 and
a tensile energy absorption index CD to MD ratio from 1.1 to 2.0 as measured at 50 % RH and 23 °C according to ISO1924-3:2005,
and an Equilibrium moisture content, Eq. MC from 7 % to 10 %, as measured according to ISO 287:2017, at 50 % RH and 23 °C, as conditioned according to ISO 187:2022.

2. Use, as claimed in claim 1, wherein the cellulose fibres of the paper substrate exhibit a Canadian Standard Freeness, CSF, value from 200 to 500 ml, such as from 200 to 450 ml, such as from 200 to 400 ml, such as from 200 to 350 ml, as measured according to ISO 5267-2:2001, after laboratory wet disintegration according to ISO 5263-1:2004.

3. Use, as claimed in any one of the preceding claims, wherein the cellulose fibres of the paper substrate have a length-weighted, average fibre length from 1.3 to 2.5 mm, such as from 1.4 to 2.5 mm, such as from 1.5 to 2.5 mm, such as from 1.6 to 2.5 mm, as measured according to ISO 16065-2:2014, after sample preparation according to ISO 5263-1:2004.

4. Use, as claimed in any one of the preceding claims, wherein the paper substrate is made from predominantly non-bleached fibres.

5. Use, as claimed in any one of the preceding claims, wherein the paper substrate is made from a fibre composition comprising a majority of non-bleached fibres, and has a colour defined within the CIELAB color space as having a lightness, L, from 30 to 85, a value on the green-red axis, a*, from 0 to 18 and a value on the blue-yellow axis, b*, from 10 to 40.

6. Use, as claimed in any one of the preceding claims, wherein the paper substrate is made from a fibre composition comprising a majority of non-bleached fibres and has a brightness from 0 to 55 % as determined in accordance with ISO 2470-1:2016.

7. Use, as claimed in any one of the preceding claims, wherein the cellulose fibre material of the paper substrate comprises fewer than 4000 shives per gram of fibre composition, such as fewer than 3000 shives per gram of fibre composition, more preferably fewer than 2000 shives per gram of fibre composition, most preferably fewer than 1000 shives per gram of fibre composition, as determined according to the method FA 10.402 from Pulpeye after sample preparation according to ISO 5263-1:2004

8. Use, as claimed in any one of the preceding claims, wherein the paper substrate has an ash content below 5%, such as below 3.5%, such as below 2.5%, as measured according to ISO 2144:2015.

9. Use, as claimed in any one of the preceding claims, wherein the method of manufacturing the paper substrate comprises the steps of
a) cooking chemical pulp of a liquid cellulose fibre composition comprising at least 65 weight-% of softwood fibres of the total fibre content,
- to disintegrate fibre bundles into individual cellulose fibres, and
- to remove lignin to a remaining content of 10 weight-% or less,
b) refining the fibres moderately to produce fibrillar fragments on the surfaces of the fibres and to further disintegrate fibre bundles into individual cellulose fibres,
c) optionally, washing the pulp to remove impurities, and
d) screening away shives and remaining particles from the disintegrated fibre composition,
before further steps of forming, pressing, sizing, drying and calendering.

10. Use, as claimed in any one of the preceding claims, wherein the top side of the paper substrate, which is intended for being barrier-coated, i.e. the coating side, has a Bendtsen surface roughness below 150 ml/min, such as below 100 ml/min, such as below 80 ml/min, such as below 60 ml/min, such as below 50 ml/min, such as below 30 ml/min, such as below 20 ml/min, as determined according to ISO 8791-2:2013.

11. Use, as claimed in any one of the preceding claims, wherein the top side, i.e. coating side, of the paper substrate has a Cobb 60 value below 40 g/m², such as below 30 g/m², such as below 25 g/m², according to ISO 535:2014.

12. Barrier-coated paper substrate (10), for use as a gas barrier material in a laminated packaging material for packaging of oxygen-sensitive products, such as in a laminated packaging material for liquid, semi-liquid or viscous food and beverage products, comprising
the paper substrate (11) as defined in any one of claims 1-10, and
at least one pre-coating (14) or gas barrier coating (12), applied onto the paper substrate by dispersion coating of an aqueous material composition, to a total, dry material coating thickness from 0.2 to 15 µm, such as from 0.2 to 8 µm, such as from 0.2 to 5 µm.

13. Barrier-coated paper substrate (10), as claimed in claim 12, wherein the at least one pre-coating (14) or gas barrier coating (12) is further coated with a vapour deposition coating (13), such as a barrier aluminium metallization coating, such as an oxygen-enriched barrier aluminium metallization coating.

14. Barrier-coated paper substrate (10), as claimed in any one of claims 12 and 13, wherein
the gas barrier coating (12) comprises from 65 to 100 weight-% of a polymer material selected from the group consisting of polyvinyl alcohol, PVOH, modified polyvinyl alcohol, such as aqueous ethylene-modified polyvinyl alcohol, EVOH_{aq}, starch, starch derivatives, modified starch materials, xylan, xylan derivatives, nanofibrillar/ microfibrillar cellulose, NFC/ MFC, cellulose ethers, such as carboxymethyl cellulose and hydroxyethyl cellulose, and blend compositions of any two or more thereof, and from 0 to 35 weight-% of inorganic particles, based on the total dry weight of the gas barrier coating (12).

15. Barrier-coated paper substrate as claimed in any one of claims 12-14, wherein the paper substrate is pre-coated beneath the gas barrier coating (12) with an aqueous pre-coating composition comprising a polymer binder and optionally clay, inorganic pigments or particles, dried and subsequently calendered.

16. Barrier-coated paper substrate as claimed in any one of claims 12-14, wherein the paper substrate is impregnated with an aqueous polymer dispersion or solution, dried and subsequently calendered.

17. Barrier-coated paper substrate as claimed in any one of claims 13-16, wherein the barrier aluminium metallization coating (13) is an oxygen-enriched barrier aluminium metallization coating, wherein
in a first phase of the vapour deposition method, a first, aluminium oxide sub-portion (13a) of the metallization coating (13) is applied adjacent and in direct contact with the free surface of the gas barrier coating (12) while adding oxygen to the aluminium metal vapour, and in a second phase of the vapour deposition coating method, a second, aluminium metal sub-portion (13b) of the metallization coating is applied onto the first, aluminium oxide sub-portion (13a),
the second, aluminium metal sub-portion (13b) being bonded to the gas barrier coating by the first, interjacent aluminium oxide sub-portion (13a) of the first phase, and the thickness of the second, aluminium metal sub-portion (13b) being greater than the thickness of the first, aluminium oxide sub-portion (13a), the oxygen-enriched barrier aluminium metallization coating (13) having a metallization coating appearance and opacity, wherein
the oxygen-enriched barrier aluminium metallization coating (13) has a total thickness from 70 nm to 150 nm, as measured by transmission electron microscopy, TEM, following sample preparation by ultramicrotomy.

18. Method for manufacturing a barrier-coated paper substrate as defined in any one of claims 12-17, comprising the steps of
a) providing and forwarding a continuous web of the paper substrate as defined in any one of claims 1-11,
b) providing an aqueous gas barrier coating composition comprising a polymer material selected from the group consisting of polyvinyl alcohol, PVOH, modified polyvinyl alcohol, such as aqueous ethylene-modified polyvinyl alcohol, EVOH_{aq}, starch, starch derivatives, modified starch materials, xylan, xylan derivatives, nanofibrillar/ microfibrillar cellulose, NFC/ MFC, cellulose ethers, such as carboxymethyl cellulose and hydroxyethyl cellulose, and blend compositions of any two or more thereof, and from 0 to 35 weight-% inorganic particles, based on the total dry weight of the gas barrier coating,
c) applying the aqueous gas barrier coating composition onto the top side of the web of the paper substrate by dispersion coating (32a),
d) drying the applied aqueous gas barrier coating from step c), to provide the gas barrier coating,
e) optionally repeating steps c) and d),
f) further coating the gas-barrier coated and dried web substrate obtained from step e), with an aluminium metallization coating by means of physical vapour deposition of aluminium metal vapour.

19. Laminated packaging material (20) for packaging of oxygen-sensitive food products, comprising as layers of a layer sequence, as viewed from outside to inside of a packaging container formed from the laminated packaging material,
an outermost, transparent, and protective material layer (22),
a barrier-coated paper substrate (10; 23) as claimed in any one of claims 12-17,
an inside polymer layer structure 24, comprising at least an innermost, heat sealable, liquid tight layer (25; 25a), which comprises a thermoplastic material and is intended to be in direct contact with a filled food product in a packaging container manufactured from the laminated packaging material.

20. Laminated packaging material (20) as claimed in claim 19, further comprising a bulk layer (21) of paper, paperboard or other cellulose-based material, laminated between the outermost, transparent and protective material layer (22) and the barrier-coated paper substrate (23).

21. Laminated packaging material as claimed in claim 20, wherein the barrier-coated paper substrate (23) is bonded to the bulk layer (21) by an intermediate bonding layer (26; 26*) of a polymer.

22. Laminated packaging material as claimed in any one of claims 19-21, wherein the outermost, transparent, and protective material layer (22), is a liquid tight, heat sealable layer of a polyolefin-based polymer, such as polyethylene-based polymer, such as low density polyethylene, LDPE.

23. Laminated packaging material as claimed in any one of claims 19-22, wherein the thermoplastic material of the innermost liquid tight, heat sealable layer (25; 25a) is a polyolefin-based material, such as a polyethylene-based polymer, such as a blend of a linear low-density metallocene-polyethylene, m-LLDPE, and low-density polyethylene, LDPE.

24. Laminated packaging material (20) according to any one of claims 19-23, wherein the innermost liquid tight, heat sealable material layer is a pre-manufactured polyolefin film (25a), such as an oriented polyethylene film comprising a major proportion of linear low density polyethylene, LLDPE, or linear low density metallocene-polyethylene, m-LLDPE, for improved robustness of the mechanical properties of the laminated packaging material.

25. Laminated packaging material (20) according to any one of claims 19-23, wherein the inside polymer layer structure (24) applied on the inner side of the barrier-coated paper substrate (23) comprises an interior layer (25b*) comprising high-density polyethylene, HDPE, medium-density polyethylene, MDPE, or a linear low-density polyethylene, LLDPE, the LLDPE having a melt flow ratio, MFR, from 4 to 20 g/10 min (190 °C/ 2.16 kg) and a melting temperature above 115 °C.

26. Packaging container (50a; 50b; 50c; 50d) comprising the laminated packaging material as defined in any one of claims 19-25.
